# EUROPÄISCHE PATENTSCHRIFT

(11) **EP 4 232 245 B1**
(45) Veröffentlichungstag und Bekanntmachung des Hinweises auf die Patenterteilung: **17.07.2024**
(21) Anmeldenummer: 22731240.2
(22) Anmeldetag: 01.06.2022
(51) Int. Cl.: B25J 9/00

(54) **ANZIEHBARE HILFSVORRICHTUNG**
WEARABLE AID
AIDE PORTABLE

(30) Priorität: 05.01.2022 DE 102022100203
(43) Veröffentlichungstag der Anmeldung: 30.08.2023
(73) Patentinhaber: J. Schmalz GmbH, 72293 Glatten (DE)
(72) Erfinder: EBERHARDT, Oliver, 72250 Freudenstadt (DE); HARBAUER-RIESS, Christina, 80802 München (DE)
(74) Vertreter: DREISS Patentanwälte PartG mbB
(86) Internationale Anmeldenummer: PCT/EP2022/064979
(87) Internationale Veröffentlichungsnummer: WO 2023/131427

(56) Entgegenhaltungen:
- EP-A1- 2 754 538
- EP-A1- 3 403 775
- WO-A1-2011/127421
- WO-A1-2011/127471
- WO-A1-2018/157302
- JP-A- 2015 182 831
- US-A1- 2021 078 161

## Beschreibung

Die Erfindung betrifft eine anziehbare Hilfsvorrichtung zur Unterstützung beim Anheben und/oder Halten von Lasten durch eine Bedienperson.

Hilfsvorrichtungen können dazu dienen, die Belastungen, welche beim Anheben von Gegenständen auf den Nutzer wirken, entweder direkt in den Boden zu übertragen oder zumindest nur durch ausgewählte Körperbereiche, z.B. einen Hüftbereich einer Bedienperson, zu leiten und so das Gelenk- und Muskelsystem des Nutzers zu entlasten.

Es ist bekannt, Hilfsvorrichtungen als stationäre oder teilmobile Vorrichtungen auszubilden, welche z.B. an einem Arbeitsplatz eines Nutzers installiert sind. Beispielsweise sind stationäre Hebehilfen wie Schlauchheber, Seilbalancer oder Manipulatoren im Stand der Technik beschrieben, mittels welchen Stückgüter aufgenommen und von einer Position zu einer anderen verlagert werden können. Solche Hilfsvorrichtungen sind jedoch in ihrer Flexibilität begrenzt, da sie nicht ohne weiteres an einen neuen Ort verbracht und dort einsatzbereit gemacht werden können.

Es sind auch Hilfsvorrichtungen bekannt, welche als vollständig mobile, vom Nutzer anziehbare Vorrichtungen ausgebildet sind. Solche mobilen Hilfsvorrichtungen weisen üblicherweise eine oder mehrere Körperanbindungen auf, über welche die Hilfsvorrichtung an den Körper einer Bedienperson ankoppelbar ist und über welche Kräfte zwischen Hilfsvorrichtung und Körper übertragen werden können.

Beispielsweise sind sog. Exoskelette bekannt, welche als Hebehilfe zum Anheben von Lasten eingesetzt werden können. Hierbei sind Auslegungen bekannt, bei welchen das Exoskelett im Wesentlichen die gesamte kinematische Kette für den Hebevorgang nachbildet, d.h. die lastragenden Gliedmaßen und Bewegungsfreiheitsgrade des Trägers ("Gelenke" des Exoskeletts) werden vom Exoskelett möglichst genau nachgebildet. Solche Lösungen sind auch als anthropomorphe Exoskelette bekannt. Derartige Exoskelette haben jedoch den Nachteil, dass aus Komplexitätsgründen in der Regel nicht alle Freiheitsgrade des menschlichen Körpers abgebildet werden, wodurch sich Bewegungseinschränkungen und somit ein reduzierter Bedienkomfort ergeben. Zudem sind solche Exoskelette oftmals schwer und daher unhandlich.

Aus der WO 2014/195373 A1 ist zudem eine nichtanthropomorphe Hebehilfe bekannt, welche zueinander bewegliche Stützelemente sowie mehrere, mit den Stützelementen starr verbundene Körperanbindungspunkte aufweist. Eine weitere tragbare Hebehilfe ist aus der WO 2018/157302 A1 bekannt.

Die bekannten Hilfsvorrichtungen sind in der Regel nur bedingt an die spezifischen anatomischen Gegebenheiten eines Nutzers anpassbar, was sich negativ auf eine Kraftübertragung zwischen Körper und Hilfsvorrichtung auswirken kann. Zudem ist bei den bekannten Hilfsvorrichtungen eine Bewegungsfreiheit für die Bedienperson und somit ein Tragekomfort für den Nutzer regelmäßig eingeschränkt.

Die Erfindung beschäftigt sich mit der Aufgabe, eine Hilfsvorrichtung bereitzustellen, welche einen Nutzer beim Handhaben eines Gegenstands effektiv entlastet und zudem eine hohe Bewegungsfreiheit ermöglicht. Außerdem soll die Hilfsvorrichtung für den Nutzer ergonomisch und komfortabel bedienbar ausgestaltet sein.

Diese Aufgabe wird durch eine Hilfsvorrichtung mit den Merkmalen des Anspruchs 1 gelöst. Die Hilfsvorrichtung ist als anziehbare Hilfsvorrichtung zur Unterstützung beim Anheben und/oder Halten von Lasten durch eine Bedienperson ausgebildet, im Sinne einer von einer Person am Körper tragbaren Vorrichtung zur Unterstützung beim Anheben und/oder Halten von Gegenständen ("körpergetragene Hebehilfe"). Mit anderen Worten ist die Hilfsvorrichtung also insbesondere derart ausgebildet, dass sie von einer Person angezogen werden kann und die Person sich mit der angezogenen Hilfsvorrichtung an einen anderen Ort bewegen kann. Insbesondere kann die Vorrichtung derart ausgebildet sein, dass sie von der Bedienperson rucksackartig anziehbar ist.

Die Hilfsvorrichtung umfasst eine Stützstruktur, welche dazu ausgebildet ist, eine Gewichtskraft und/oder Trägheitskraft einer Last aufzunehmen und diese Kraft in bestimmte Körperbereiche der Bedienperson umzuleiten.

Die Stützstruktur umfasst eine erste (rechte) Stütze und eine von der ersten Stütze separate zweite (linke) Stütze. Die erste und die zweite Stütze weisen jeweils einen Rückenabschnitt und einen Auslegerabschnitt auf. Die Stützen sind derart ausgebildet, dass dann, wenn die Hilfsvorrichtung von der Bedienperson angezogen ist, der Rückenabschnitt posterior, also dorsal bzw. "an der Rückseite" des Körpers, angeordnet ist und sich im Wesentlichen beginnend von der Hüfte cranial entlang der Rückenpartie der Bedienperson erstreckt oder sich beginnend von der Hüfte cranial entlang der Rückenpartie der Bedienperson erstreckt. Dies meint nicht, dass der Rückenabschnitt exakt parallel zu dem Rücken der Bedienperson verlaufen muss. Der Auslegerabschnitt ist derart ausgebildet, dass er sich bei angezogener Hilfsvorrichtung von posterior nach anterior, also ventral bzw. "von der Rückseite zur Vorderseite des Körpers", erstreckt. Bei aufrecht stehender Bedienperson erstreckt sich der Rückenabschnitt insbesondere im Wesentlichen vertikal und der Auslegerabschnitt zumindest abschnittsweise horizontal. Insofern kann der Rückenabschnitt eine Vertikalstütze bilden und der Auslegerabschnitt kann eine Horizontalstütze bilden.

Der Rückenabschnitt und/oder der Auslegerabschnitt kann gerade entlang seiner Längserstreckung ausgebildet sein oder aber entlang seiner Längserstreckung zumindest abschnittsweise eine Krümmung aufweisen. Der Auslegerabschnitt kann sich insbesondere an den Rückenabschnitt anschließen. Vorzugsweise erstreckt sich der jeweilige Auslegerabschnitt bei angezogener Hilfsvorrichtung über eine Schulter der Bedienperson. Der Rückenabschnitt und der Auslegerabschnitt können einstückig oder voneinander separat ausgebildet sein. Insbesondere kann der Rückenabschnitt mit dem Auslegerabschnitt beweglich verbunden sein, beispielsweise schwenkbeweglich um eine erste und/oder zweite Auslegerschwenkachse (s.u.). Der Rückenabschnitt und der Auslegerabschnitt sind insbesondere in sich formstabil ausgebildet. Beispielsweise ist es denkbar, dass die Stützen aus Rohrabschnitten und/oder abgelängten Profilteilen gebildet sind. Um die Hilfsvorrichtung an verschiedene Körpergrößen, insbesondere Rückenlängen, anpassen zu können, kann es außerdem vorteilhaft sein, wenn der Rückenabschnitt einer jeweiligen Stütze selbst längenveränderbar ausgebildet sind. Zudem kann es vorteilhaft sein, wenn der Auslegerabschnitt längenveränderbar ausgebildet ist.

Die Hilfsvorrichtung umfasst außerdem eine obere Körperanbindung, insbesondere Oberkörperanbindung, zur Ankopplung der Stützstruktur an einen Oberkörper der Bedienperson. Insbesondere kann die obere Körperanbindung dazu ausgebildet sein, die Stützstruktur an einen Rücken-, Schulter-, und/oder Brustbereich der Bedienperson anzukoppeln.

Die Hilfsvorrichtung umfasst außerdem eine untere Körperanbindung, insbesondere Hüftanbindung, zur Ankopplung der Stützstruktur an einen Becken-, Hüft-, und/oder Lendenbereich der Bedienperson. Die untere Körperanbindung ist insbesondere nicht dazu ausgebildet, die Stützstruktur an untere Extremitäten der Bedienperson, wie z.B. an einen Oberschenkel, Knie oder Unterschenkel, anzukoppeln.

Die obere Körperanbindung und die untere Körperanbindung sind insofern insbesondere derart ausgebildet, dass über sie Kräfte zwischen Körper und Stützstruktur übertragbar sind. Insbesondere kann die obere Körperanbindung dazu ausgebildet sein, solche Kräfte in den Körper einzuleiten, die aus dem Eigengewicht der Stützstruktur, den zum statischen Gleichgewicht erforderlichen Stützreaktionen und/oder den Führungskräften der Stützenabschnitte resultieren. Die untere Körperanbindung kann insbesondere dazu ausgebildet sein, die sich aus der Handhabung einer Last ergebenden Kräfte und Momente in den Körper einzuleiten. Insbesondere sind die obere und/oder die untere Körperanbindung dazu ausgebildet, die Stützstruktur an einem Körperbereich der Bedienperson festzulegen und somit die Hilfsvorrichtung an dem Körper der Bedienperson zu halten. Insofern sind die obere und/oder die untere Körperanbindung insbesondere derart ausgebildet, dass durch Ankoppeln der Stützstruktur an den Körper mittels der oberen bzw. unteren Körperanbindung die Hilfsvorrichtung von der Bedienperson "angezogen" werden kann. Die obere und/oder die untere Körperanbindung können mit der Stützstruktur lösbar verbunden sein, insbesondere wiederholbar verbindbar und wieder trennbar sein. Vorzugsweise sind die obere Körperanbindung und die untere Körperanbindung voneinander beabstandet angeordnet und, insbesondere ausschließlich, über die Stützstruktur miteinander kraftgekoppelt. Dies hat den Vorteil, dass keine oder nur ein geringer Anteil der unmittelbar aus einer gehaltenen Last resultierenden vertikalen Kräfte in den Oberkörper des Nutzers eingeleitet werden.

Die Hilfsvorrichtung umfasst außerdem eine erste (rechte) Handanbindung zur Anbindung an einen rechten Hand- oder Unterarmbereich der Bedienperson, beispielsweise an ein Handgelenk und/oder eine Handwurzel der Bedienperson. Die erste Handanbindung ist mit der ersten Stütze, insbesondere einem freien Ende des Auslegerabschnitts der ersten Stütze, über eine erste längenveränderbare Verbindungseinrichtung verbunden.

Die Hilfsvorrichtung umfasst außerdem eine zweite (linke) Handanbindung zur Anbindung an einen linken Hand- oder Unterarmbereich der Bedienperson, beispielsweise ein Handgelenk und/oder eine Handwurzel der Bedienperson. Die zweite Handanbindung ist mit der zweiten Stütze, insbesondere einem freien Ende des Auslegerabschnitts der zweiten Stütze, über eine zweite längenveränderbare Verbindungseinrichtung verbunden.

Die Handanbindungen dienen insofern als Bindeglied zwischen der menschlichen Hand und der Hilfsvorrichtung. Über die Handanbindungen und die Verbindungseinrichtungen können Gewichts- und Trägheitskräfte der gehaltenen Last in die Stützstruktur eingeleitet werden und dann über die Körperanbindungen in ausgewählte Körperbereiche der Bedienperson eingeleitet werden. Bei der vorgeschlagenen Hilfsvorrichtung beginnt die Unterstützung insofern insbesondere bereits ab dem Handgelenk der Bedienperson. Vorzugsweise sind die Handanbindungen derart ausgebildet, dass zum Greifen des zu hebenden Gegenstands die menschliche Hand selbst verwendet wird, welche in Ihrer Vielseitigkeit technischen Greifsysteme überlegen ist. Zu diesem Zweck können die Handanbindungen in verschiedener Weise ausgestaltet sein. Denkbar ist beispielsweise eine Ausgestaltung als Manschette, welche die Handwurzel und ggf. auch das Handgelenk der Hand umfängt.

Die längenveränderbaren Verbindungseinrichtungen können insbesondere als Seilzug ausgebildet sein. Insofern kann die erste Handanbindung über einen ersten Seilzug mit der ersten Stütze verbunden sein und die zweite Handanbindung kann über einen zweiten Seilzug mit der zweiten Stütze verbunden sein. Insbesondere kann eine gemeinsame oder jeweilige Antriebseinrichtung zum Antreiben der Seilzüge vorgesehen sein. Auf diese Weise kann eine aktive Unterstützung der Bedienperson, z.B. bei einem Hebevorgang oder bei einem statischen Halten einer Last, erzielt werden. Die wenigstens eine Antriebseinrichtung kann insbesondere an der Stützstruktur gehaltert sein. Insbesondere können die Seile der Seilzüge jeweils über eine, vorzugsweise innerhalb der jeweiligen Stütze verlaufende, Seilführung geführt sein und über eine Seilumlenkeinrichtung aus der Stütze, insbesondere dem Auslegerabschnitt, austreten.

Bei der vorgeschlagenen Hilfsvorrichtung sind die erste und die zweite Stütze jeweils gelenkig mit der unteren Körperanbindung verbunden. Im Konkreten ist die erste Stütze, insbesondere der Rückenabschnitt der ersten Stütze, an einer ersten unteren Verbindungsstelle über eine erste untere Gelenkeinrichtung mit der unteren Körperanbindung verbunden und die zweite Stütze, insbesondere der Rückenabschnitt der zweiten Stütze, ist an einer zweiten unteren Verbindungsstelle über eine zweite untere Gelenkeinrichtung mit der unteren Körperanbindung verbunden.

Eine solche Hilfsvorrichtung ermöglicht es, eine Bedienperson beim Handhaben von Gegenständen wirksam zu entlasten, ohne aber eine Bewegungsfreiheit der Bedienperson übermäßig einzuschränken. Insbesondere wird durch die gelenkige Verbindung der Stützen mit der unteren Körperanbindung eine Relativbewegung von Stützstruktur und unterer Körperanbindung ermöglicht, sodass die Stützstruktur zumindest in gewissem Maße einer Körperbewegung der Bedienperson folgen kann. Beispielsweise ist es denkbar, dass die Bedienperson auch bei angezogener Hilfsvorrichtung den Oberkörper nach vorne beugen oder zur Seite neigen kann, was insbesondere zur Aufnahme oder zum Ablegen von Gegenständen von großem Vorteil ist. Die Bedienperson kann insofern trotz angezogener Hilfsvorrichtung eine Arbeitstätigkeit mit weitgehend "natürlichen" Bewegungsmustern verrichten.

Die erste untere Gelenkeinrichtung und die zweite untere Gelenkeinrichtung weisen jeweils wenigstens zwei, insbesondere drei, Gelenkfreiheitsgrade auf. Insofern sind die unteren Gelenkeinrichtungen insbesondere derart ausgebildet, dass die Stützen entlang mindestens zweier Freiheitsgrade relativ zu der unteren Körperanbindung bewegbar sind.

Im Rahmen einer vorteilhaften Ausgestaltung können die erste untere Gelenkeinrichtung und die zweite untere Gelenkeinrichtung jeweils derart ausgebildet sein, dass dann, wenn die Hilfsvorrichtung von einer Bedienperson angezogen ist, ein Neigungswinkel der jeweiligen Stütze relativ zu der Medianebene und/oder ein Neigungswinkel der jeweiligen Stütze relativ zu der Frontalebene veränderbar, insbesondere einstellbar, sind. Unter der Medianebene wird im vorliegenden Zusammenhang - wie in der Anatomie üblich - eine, insbesondere lotrechte, Körperebene bezeichnet, welche sich von der vorderen Körperwand zu der hinteren Körperwand erstreckt und den Körper symmetrisch in eine rechte und eine linke Hälfte teilt. Unter der Frontalebene wird im folgenden Zusammenhang - wie in der Anatomie üblich - eine, insbesondere lotrechte, Körperebene bezeichnet, welche den Körper in einen vorderen und einen hinteren Anteil unterteilt. Eine solche Ausgestaltung ermöglicht es der Bedienperson, während eines Arbeitsprozesses möglichst natürliche Körperbewegungen auszuführen, beispielsweise den Oberkörper zu beugen, zur Seite zu neigen und/oder relativ zur Hüfte zu verdrehen. Außerdem kann auf diese Weise eine Ausgleichsbewegung zur Hüfte, insbesondere beim Gehen, realisiert werden. Vorzugsweise sind die erste und die zweite untere Gelenkeinrichtung voneinander unabhängig einstellbar.

Um die vorstehend genannten Körperbewegungen möglichst störungsfrei durchführen zu können, kann es außerdem vorteilhaft sein, wenn die erste untere Gelenkeinrichtung und die zweite untere Gelenkeinrichtung jeweils derart ausgebildet sind, dass die jeweilige Stütze um ihre Längsachse schwenkbar, insbesondere drehbar, ist. Insbesondere sind die erste und die zweite Stütze schwenkbar, insbesondere drehbar, an den jeweiligen unteren Verbindungsstellen an der unteren Körperanbindung gehaltert.

Eine besonders vorteilhafte Ausgestaltung sieht vor, dass die erste Stütze und die zweite Stütze jeweils über ein Kugelgelenk mit der unteren Körperanbindung verbunden sind. Insofern können die erste untere Gelenkeinrichtung und die zweite untere Gelenkeinrichtung jeweils ein Kugelgelenk umfassen, insbesondere daraus bestehen.

Für eine effiziente Krafteinleitung und einen hohen Tragekomfort kann es außerdem vorteilhaft sein, wenn die Hilfsvorrichtung variabel an die Körpermaße einer Bedienperson anpassbar ist. Zu diesem Zweck kann die untere Körperanbindung insbesondere derart ausgebildet sein, dass eine Relativposition von erster unterer Verbindungsstelle und zweiter unterer Verbindungsstelle, insbesondere von erster unterer Gelenkeinrichtung und zweiter unterer Gelenkeinrichtung, veränderbar, insbesondere einstellbar, ist. Besonders vorteilhaft kann es sein, wenn die untere Körperanbindung derart ausgebildet ist, dass eine Position der ersten unteren Verbindungsstelle und/oder der zweiten unteren Verbindungsstelle dann, wenn die Hilfsvorrichtung von der Bedienperson angezogen ist, lateral und/oder medial relativ zur Medianebene, also insbesondere orthogonal zur Medianebene, veränderbar ist. Dies ermöglicht es, die untere Körperanbindung an eine Hüftbreite und/oder eine entsprechende Rundung der Hüfte der Bedienperson anzupassen und auf diese Weise sowohl einen hohen Tragekomfort als auch eine effiziente Einleitung von Kräften in den Hüftbereich der Bedienperson zu erzielen.

Außerdem kann es vorteilhaft sein, wenn die untere Körperanbindung derart ausgebildet ist, dass dann, wenn die Hilfsvorrichtung von der Bedienperson angezogen ist, eine Position der ersten unteren Verbindungsstelle und/oder der zweiten unteren Verbindungsstelle in Richtung anterior und/oder in Richtung posterior relativ zur Frontalebene, insbesondere orthogonal zur Frontalebene, veränderbar, insbesondere einstellbar, ist. Dies ermöglicht es, einen dorsalen Abstand der ersten und/oder zweiten unteren Verbindungsstelle zu der Frontalebene, also insbesondere einen Abstand der ersten und/oder zweiten unteren Verbindungsstelle zu dem Rücken der Bedienperson, einzustellen und auf diese Weise die Hilfsvorrichtung an die spezifische Rückenform der Bedienperson anzupassen.

Im Rahmen einer vorteilhaften Ausgestaltung kann die untere Körperanbindung eine untere Kraftverteilereinrichtung umfassen, welche mit den Stützen, insbesondere mit den Rückenabschnitten der Stützen, verbunden ist. Außerdem kann die untere Körperanbindung eine mit der unteren Kraftverteilereinrichtung über einen oder mehrere Krafteinleitungspunkte oder Krafteinleitungsflächen verbundene Körperanbindungseinrichtung zur Anbindung an einen Körperbereich der Bedienperson, insbesondere an einen Hüft-, Becken- und/oder Lendenbereich der Bedienperson, umfassen. Die untere Kraftverteilereinrichtung ist insbesondere dazu ausgebildet, Kräfte von den Stützen aufzunehmen und in die untere Körperanbindungseinrichtung umzuleiten, welche die Kräfte dann, insbesondere großflächig und unter Vermeidung von Druckspitzen, in den Körper der Bedienperson einleitet.

Die untere Körperanbindungseinrichtung kann insbesondere flexibel ausgebildet sein, sodass die Körperanbindungseinrichtung an eine Anatomie der Bedienperson variabel anpassbar ist. Zu diesem Zweck kann die untere Körperanbindungseinrichtung wenigstens ein Textilteil umfassen, insbesondere daraus bestehen. Das wenigstens eine Textilteil kann beispielsweise in Form eines Gurtes oder einer Manschette ausgebildet sein. Beispielsweise ist es denkbar, dass die untere Körperanbindungseinrichtung einen oder mehrere Gurte umfasst, welche das Becken und/oder die Hüfte der Bedienperson umfassen und mit entsprechenden Schließelementen ausgestattet sind, die eine flexible Anpassung an eine Körpergröße der Bedienperson ermöglichen. Eine solche Ausgestaltung bietet einen hohen Tragekomfort und begünstigt zugleich eine zuverlässige Halterung der Hilfsvorrichtung am Körper der Bedienperson, was eine effiziente Krafteinleitung im Bereich der Hüfte ermöglicht.

Im Rahmen einer vorteilhaften Ausgestaltung, kann die untere Kraftverteilereinrichtung einen unteren Grundkörper aufweisen, welcher sich zwischen der ersten Stütze und der zweiten Stütze, insbesondere zwischen dem Rückenabschnitt der ersten Stütze und dem Rückenabschnitt der zweiten Stütze, erstreckt. In vorteilhafter Weise sind die unteren Gelenkeinrichtungen an dem Grundkörper angeordnet. Der Grundkörper dient insofern als unteres Verbindungsglied zwischen der ersten und der zweiten Stütze. Der Grundkörper kann ein- oder mehrteilig ausgebaut aufgebaut sein.

Vorzugsweise umfasst die untere Körperanbindung, insbesondere der untere Grundkörper, einen ersten unteren Verstellmechanismus, welcher dazu ausgebildet ist, einen Abstand der unteren Verbindungsstellen, insbesondere der unteren Gelenkeinrichtungen, zu verändern, insbesondere einzustellen. Insbesondere kann der erste untere Verstellmechanismus dazu ausgebildet sein, eine Position der unteren Verbindungsstellen bei angezogener Hilfsvorrichtung lateral und/oder medial relativ zur Medianebene zu verändern. Beispielsweise ist es denkbar, dass die Stützen jeweils an einer Zahnstange gehaltert sind, welche über einen Zahnstangenmechanismus lateral und medial verschiebbar an dem Grundkörper gehaltert ist.

Außerdem kann es vorteilhaft sein, wenn die untere Körperanbindung einen zweiten unteren Verstellmechanismus umfasst, welcher dazu ausgebildet ist, eine Position der unteren Verbindungsstellen in Richtung anterior und/oder in Richtung posterior relativ zu der Frontalebene zu verändern. Beispielsweise ist es denkbar, dass die erste und die zweite Stütze, insbesondere die erste und die zweite untere Gelenkeinrichtung, jeweils über eine Schwenkeinrichtung um eine Schwenkachse schwenkbeweglich an dem Grundkörper gehaltert sind. Insbesondere ist die Schwenkachse bei angezogener Hilfsvorrichtung und aufrechter Körperposition orthogonal zur Transversalebene orientiert. Unter der Transversalebene wird im folgenden Zusammenhang - wie in der Anatomie üblich - eine Ebene bezeichnet, welche quer, also orthogonal zur Längsachse der Bedienperson, insbesondere horizontal, durch den Körper verläuft und somit den Körper der Bedienperson in einen oberen und einen unteren Anteil teilt. Die Schwenkeinrichtung kann insofern insbesondere dazu ausgebildet sein, eine Position der unteren Gelenkeinrichtungen in Richtung anterior bzw. in Richtung posterior relativ zur Frontalebene zu verändern. Beispielsweise können die unteren Gelenkeinrichtungen jeweils an einem Schwenkflügel drehfest gehaltert sein, welcher wiederum an dem unteren Grundkörper schwenkbeweglich um die Schwenkachse gehaltert, insbesondere gelagert, ist. Der erste und/oder der zweite untere Verstellmechanismus können vorzugsweise über ein Bedienelement derart betätigbar sein, dass die Bedienperson bei angezogener Hilfsvorrichtung eigenständig eine Position der Verbindungsstellen einstellen und bei Bedarf verändern kann.

Im Rahmen einer vorteilhaften Ausgestaltung kann die untere Kraftverteilereinrichtung eine erste, insbesondere anatomisch geformte, Hüftschale zur Anlage an einen rechten Hüftbereich der Bedienperson und eine zweite, insbesondere anatomisch geformte, Hüftschale zur Anlage an einen linken Hüftbereich der Bedienperson umfassen. Die Hüftschalen sind insbesondere an der flexiblen Körperanbindungseinrichtung, vorzugsweise an dem wenigstens einen Textilteil, gehaltert und über dieses miteinander kraftgekoppelt. Insbesondere ist die erste Stütze über die erste untere Gelenkeinrichtung mit der ersten Hüftschale verbunden und die zweite Stütze ist über die zweite untere Gelenkseinrichtung mit der zweiten Hüftschale verbunden. Die Hüftschalen sind insofern insbesondere dazu ausgebildet, Handhabungskräfte von den Stützen aufzunehmen und, insbesondere großflächig und unter Vermeidung von Druckspitzen, in den Hüftbereich der Bedienperson einzuleiten. Eine solche Ausgestaltung der unteren Kraftverteilereinrichtung mit Hüftschalen ermöglicht eine besonders effektive Krafteinleitung in den Körper und zeichnet sich zugleich durch einen hohen Tragekomfort aus.

Für eine effiziente Krafteinleitung kann es außerdem vorteilhaft sein, wenn die Hüftschalen derart ausgebildet sind, dass die Hüftschalen dann, wenn die Hilfsvorrichtung von der Bedienperson angezogen ist, derart in einen Leistenbereich der Bedienperson ragen, dass nach dorsal, also in Richtung des Rückens, in den Körper gerichtete, insbesondere horizontale, Kräfte über die Hüftschalen in den Körper der Bedienperson einleitbar sind

Um die untere Körperanbindung an einen spezifischen Körperbau der Bedienperson individuell anpassen zu können, kann es ferner vorteilhaft sein, wenn die erste und die zweite Hüftschale, insbesondere entlang der Hüftkontur, verschiebbar an der flexiblen Körperanbindungseinrichtung, insbesondere dem wenigstens einen Textilteil, gehaltert sind. Insbesondere können die Hüftschalen derart an der flexiblen Körperanbindungseinrichtung gehaltert sein, dass durch Verschieben der ersten und/oder der zweiten Hüftschale relativ zu der flexiblen Körperanbindungseinrichtung ein Abstand der unteren Verbindungsstellen und somit ein Abstand der Stützen relativ zueinander veränderbar, insbesondere einstellbar, ist. Insbesondere können die Hüftschalen derart an der unteren Körperanbindungseinrichtung verschiebbar gehaltert sein, dass durch Verschieben der Hüftschalen eine Position der unteren Verbindungsstellen lateral bzw. medial relativ zur Medianebene und/oder in Richtung anterior bzw. in Richtung posterior relativ zur Frontalebene veränderbar, insbesondere einstellbar, ist.

Im Rahmen einer vorteilhaften Weiterbildung kann die untere Kraftverteilereinrichtung außerdem wenigstens eine Lordosenstütze umfassen. Die wenigstens eine Lordosenstütze kann dann insbesondere an der unteren Körperanbindungseinrichtung, insbesondere dem wenigstens einen Textilteil, gehaltert sein und über diese mit der ersten und der zweiten Hüftschale kraftgekoppelt sein. Hierdurch können Handhabungskräfte auf zusätzliche Körperbereiche verteilt werden. Zusätzlich zu einer Kraftübertragung über die untere Körperanbindungseinrichtung kann die wenigstens eine Lordosenstütze mit den Hüftschalen jeweils über wenigstens ein elastisches Element, insbesondere elastisches Band, verbunden sein, welches zwischen Lordosenstütze und Hüftschalen gespannt ist. In Abhängigkeit einer Steifigkeit des wenigstens einen elastischen Elements kann eingestellt werden, wie viel Kraft prozentual in die Lordosenstütze eingeleitet wird.

Es ist denkbar, dass die Stützstruktur nur über eine der beiden Stützen mit der oberen Körperanbindung gekoppelt ist. Für eine effiziente Krafteinleitung erweist es sich jedoch als vorteilhaft, wenn die erste Stütze an einer ersten oberen Verbindungsstelle mit der oberen Körperanbindung verbunden ist und wenn die zweite Stütze an einer zweiten oberen Verbindungsstelle mit der oberen Körperanbindung verbunden ist. Im Rahmen einer vorteilhaften Weiterbildung können die erste Stütze und die zweite Stütze gelenkig mit der oberen Körperanbindung verbunden sein. Insbesondere kann die erste Stütze an der ersten oberen Verbindungsstelle über eine erste obere Gelenkeinrichtung mit der oberen Körperanbindung verbunden sein und die zweite Stütze kann an der zweiten oberen Verbindungsstelle über eine zweite obere Gelenkeinrichtung mit der oberen Körperanbindung verbunden sein. Eine solche Ausgestaltung erhöht die Bewegungsfreiheit der Bedienperson weiter und verbessert zudem den Tragekomfort der Hilfsvorrichtung.

Besonders vorteilhaft erweist es sich, wenn die erste obere Gelenkeinrichtung und die zweite obere Gelenkeinrichtung jeweils mindestens zwei, vorzugsweise mindestens drei, Gelenkfreiheitsgrade aufweisen, also insbesondere derart ausgebildet sind, dass die Stützen entlang wenigstens zweier, vorzugsweise entlang wenigstens dreier, Freiheitsgrade relativ zu der oberen Körperanbindung bewegbar sind.

Die oberen Gelenkeinrichtungen können insbesondere jeweils einen ersten Schwenkfreiheitsgrad um eine erste Schwenkachse aufweisen. Bei angezogener Hilfsvorrichtung ist die erste Schwenkachse insbesondere orthogonal zu der Medianebene orientiert. Ein solcher Schwenkfreiheitsgrad ermöglicht insbesondere eine Rumpfbeuge der Bedienperson und trägt gleichzeitig dazu bei, asymmetrische Körperbewegungen auszugleichen. Darüber hinaus begünstigt der erste Schwenkfreiheitsgrad eine störungsfreie Rotation des Oberkörpers relativ zur Hüfte, insbesondere in Kombination mit den vorstehend beschriebenen Gelenkfreiheitsgraden der unteren Gelenkeinrichtungen. Der erste Schwenkfreiheitsgrad kann insbesondere durch ein erstes Schwenkgelenk bereitgestellt sein, welches mit der oberen Körperanbindung, insbesondere einem oberen Grundkörper der Körperanbindung, verbunden ist.

Die oberen Gelenkeinrichtungen können außerdem jeweils einen zweiten Schwenkfreiheitsgrad um eine zu der ersten Schwenkachse orthogonale zweite Schwenkachse umfassen. Bei angezogener Hilfsvorrichtung ist die zweite Schwenkachse dann insbesondere orthogonal zu der Frontalebene orientiert. Der zweite Schwenkfreiheitsgrad ermöglicht es ebenfalls, asymmetrische Körperbewegungen nachzubilden, welche beispielsweise beim Heben und/oder Tragen mit nur einer Hand entstehen. Darüber hinaus begünstigt der zweite Schwenkfreiheitsgrad eine störungsfreie Seitenneigung und/eine Rotation des Oberkörpers relativ zur Hüfte, insbesondere in Kombination mit den vorstehend beschriebenen Gelenksfreiheitsgraden der unteren Gelenkeinrichtungen. Der zweite Schwenkfreiheitsgrad kann insbesondere durch ein zweites Schwenkgelenk bereitgestellt sein, welches mit dem ersten Schwenkgelenk verbunden ist.

Die oberen Gelenkeinrichtungen können außerdem jeweils einen translatorischen Freiheitsgrad umfassen, insbesondere entlang einer Längsachse der jeweiligen Stütze, weiter insbesondere entlang einer Längsachse des Rückenabschnitts der jeweiligen Stütze. Insofern können die oberen Gelenkeinrichtungen insbesondere derart ausgebildet sein, dass die Stützen axial entlang ihrer Längsachse verschiebbar an der oberen Körperanbindung gehaltert sind. Durch den translatorischen Freiheitsgrad können insbesondere obere und untere Körperanbindung voneinander entkoppelt werden und somit verhindert werden, dass vertikale Kräfte, die aus gehobenen Lasten resultieren, in den Oberkörper, insbesondere in die Schultern der Bedienperson, eingeleitet werden. Darüber hinaus können durch den translatorischen Freiheitsgrad gegensinnige Hüftbewegungen beim Gehen und/oder eine Rückenlängung im Zuge einer Rumpfbeuge in der Hilfsvorrichtung nachgebildet werden.

Der translatorische Freiheitsgrad kann insbesondere durch eine Verschiebehülse bereitgestellt sein, in welcher die jeweilige Stütze, insbesondere mit ihrem Rückenabschnitt, axial entlang der Längsachse der Stütze verschiebbar aufgenommen ist. Es ist auch denkbar, dass der translatorische Freiheitsgrad in der jeweiligen Stütze, insbesondere in dem Rückenabschnitt, selbst ausgebildet ist.

Die Verschiebehülse kann insbesondere derart ausgebildet sein, dass die Stütze um ihre Längsachse, also um die Verschiebeachse, schwenkbar in der Verschiebehülse aufgenommen ist. Eine solche Ausgestaltung erhöht die Bewegungsfreiheit des Benutzers, insbesondere dann, wenn sich Hüfte und Brust beim Gehen oder im Zuge einer Rückenrotation gegeneinander verdrehen. Darüber hinaus ermöglicht es eine solche Ausgestaltung beispielsweise die Arme auch dann nach links und rechts zu bewegen, wenn die Arme parallel zur Medianebene nach anterior ausgestreckt sind. Eine solche Körperbewegung wird insbesondere in Kombination mit den Gelenksfreiheitsgraden der unteren Gelenkeinrichtungen begünstigt. Vorzugsweise ist die jeweilige Verschiebehülse derart ausgebildet, dass ein maximaler Schwenkwinkel derart begrenzt ist, dass der Auslegerabschnitt nicht gegen einen Körperbereich, insbesondere gegen den Kopf, der Bedienperson schwenkbar ist.

Im Rahmen einer vorteilhaften Ausgestaltung kann die obere Körperanbindung eine obere Kraftverteilereinrichtung umfassen, welche mit den Stützen, insbesondere mit dem Rückenabschnitt der Stützen, über die oberen Gelenkeinrichtungen verbunden ist. Die obere Körperanbindung kann außerdem eine mit der oberen Kraftverteilereinrichtung verbundene flexible, insbesondere an eine Anatomie der Bedienperson anpassbare, obere Körperanbindungseinrichtung zur Anbindung an einen Oberkörperbereich der Bedienperson umfassen. Die obere Kraftverteilereinrichtung ist insbesondere dazu ausgebildet, Kräfte von den Stützen aufzunehmen und in die obere Körperanbindungseinrichtung umzuleiten, welche die Kräfte dann in den Körper der Bedienperson einleitet.

Die obere Körperanbindungseinrichtung kann insbesondere wenigstens ein Textilteil umfassen, insbesondere daraus bestehen. Das wenigstens eine Textilkeil kann beispielsweise in Form eines Gurtes oder einer Manschette ausgebildet sein. Es ist beispielsweise denkbar, dass die obere Körperanbindungseinrichtung ein Gurtsystem umfasst. Insbesondere kann das Gurtsystem derart ausgebildet sein, dass die Hilfsvorrichtung von der Bedienperson rucksackartig anziehbar ist.

Eine besonders stabile Ausgestaltung kann darin bestehen, dass die obere Kraftverteilereinrichtung einen oberen Grundkörper aufweist, welcher sich zwischen der ersten Stütze und der zweiten Stütze erstreckt, insbesondere zwischen dem Rückenabschnitt der ersten Stütze und dem Rückenabschnitt der zweiten Stütze. Dann können die oberen Gelenkeinrichtungen an dem oberen Grundkörper angeordnet sein. Der obere Grundkörper dient insofern als oberes Verbindungsglied zwischen erster und zweiter Stütze. Der obere Grundkörper kann ein- oder mehrteilig aufgebaut sein. Im Rahmen einer vorteilhaften Weiterbildung kann die obere Kraftverteilereinrichtung außerdem eine Krafteinleitungsplatte zur Unterstützung einer Einleitung von Horizontalkräften in einen Rückenbereich der Bedienperson umfassen. Die Krafteinleitungsplatte ist insbesondere derart an der oberen Körperanbindung angeordnet, dass die Krafteinleitungsplatte bei angezogener Hilfsvorrichtung parallel zu einer Rückenfläche der Bedienperson, insbesondere mittig auf dem Rücken, ausgerichtet ist. Vorzugsweise ist die Krafteinleitungsplatte mit dem oberen Grundkörper derart verbunden, dass ein Abstand der Krafteinleitungsplatte zu dem oberen Grundkörper und somit ein Abstand zwischen Grundkörper und Rücken veränderbar, insbesondere einstellbar, ist. Die Krafteinleitungsplatte ist zudem vorzugsweise derart mit der oberen Körperanbindungseinrichtung, beispielsweise dem vorstehend beschriebenen Gurtsystem, verbunden, dass eine Position der Krafteinleitungsplatte cranial, also in Richtung des Kopfs der Bedienperson, bzw. caudal, also in Richtung des Gesäß der Bedienperson, veränderbar, insbesondere einstellbar, ist. Beispielsweise ist es denkbar, dass die Position der Krafteinleitungsplatte durch Veränderung einer Länge des vorstehend beschriebenen Gurtsystems cranial bzw. caudal veränderbar ist. Eine solche Ausgestaltung ermöglicht es, die Position der Krafteinleitungsplatte an die anatomischen Gegebenheiten der Bedienperson flexibel anzupassen und somit eine effiziente Krafteinleitung in den Körper zu erzielen.

Um die obere Körperanbindung flexibel an eine Rückenform der Bedienperson anpassen zu können, kann es außerdem vorteilhaft sein, wenn die obere Körperanbindung derart ausgebildet ist, dass eine Relativposition von erster oberer Verbindungsstelle und zweiter oberer Verbindungsstelle veränderbar, insbesondere einstellbar, ist. Insbesondere kann die obere Körperanbindung derart ausgebildet sein, dass dann, wenn die Hilfsvorrichtung von der Bedienperson angezogen ist, eine Position der ersten oberen Verbindungsstelle und/oder der zweiten oberen Verbindungsstelle lateral und/oder medial relativ zur Medianebene veränderbar, insbesondere einstellbar, ist. Eine solche Ausgestaltung ermöglicht es, die obere Körperanbindung an eine Rückenbreite anzupassen und somit eine für die Bedienperson optimale Passform der Hilfsvorrichtung einzustellen. Die obere Körperanbindung kann außerdem derart ausgebildet sein, dass dann, wenn die Hilfsvorrichtung von der Bedienperson angezogen ist, eine Position der ersten oberen Verbindungsstelle und/oder der zweiten oberen Verbindungsstelle in Richtung anterior und/oder in Richtung posterior relativ zur Frontalebene veränderbar, insbesondere einstellbar, ist. Dies ermöglicht es, einen Abstand der Stützen zu dem Rücken der Bedienperson einzustellen. In Kombination mit der gelenkigen Verbindung der Stützen mit der unteren Körperanbindung kann durch die vorstehend beschriebenen Verstellmöglichkeiten der oberen Körperanbindung insbesondere eine Neigung der Stützen relativ zur Medianebene und zur Frontalebene erzielt werden.

Besonders vorteilhaft kann es sein, wenn die obere und die untere Körperanbindung derart ausgebildet sind, dass eine Relativposition der oberen Verbindungsstellen und eine Relativposition der unteren Verbindungsstellen voneinander unabhängig veränderbar, insbesondere einstellbar, ist. Eine solche Ausgestaltung ermöglicht es, Kombinationen verschiedener Anatomien abzubilden, z.B. breite Schultern in Kombination mit schmalen Hüften. Dies wird insbesondere durch Kombination der Verstellbarkeit von oberer und/oder unterer Körperanbindung mit der gelenkigen Verbindung der Stützen mit der unteren und/oder oberen Körperanbindung begünstigt.

Im Rahmen einer vorteilhaften Ausgestaltung kann die obere Körperanbindung einen ersten oberen Verstellmechanismus aufweisen, welcher dazu ausgebildet ist, eine Position der ersten und/oder der zweiten oberen Verbindungsstelle bei angezogener Hilfsvorrichtung lateral und/oder medial relativ zur Medianebene zu verändern und somit einen Abstand der Stützen voneinander einzustellen. Um eine Position von erster und zweiter oberer Verbindungsstelle voneinander unabhängig einstellen zu können, kann es vorteilhaft sein, wenn der ersten und der zweiten Stütze jeweils ein erster oberer Verstellmechanismus zugeordnet ist, welcher dazu ausgebildet ist, die obere Verbindungsstelle der jeweiligen Stütze bei angezogener Hilfsvorrichtung lateral und medial relativ zur Medianebene zu verlagern. Beispielsweise ist es denkbar, dass die Stützen jeweils an einer Zahnstange gehaltert sind, welche über einen Zahnstangenmechanismus lateral und medial verschiebbar an der oberen Körperanbindung, insbesondere einem Grundkörper der oberen Körperanbindung, gehaltert sind.

Alternativ oder ergänzend kann die obere Körperanbindung einen zweiten oberen Verstellmechanismus aufweisen, welcher dazu ausgebildet ist, eine Position der ersten und/oder der zweiten oberen Verbindungsstelle bei angezogener Hilfsvorrichtung in Richtung anterior (ventral) und/oder in Richtung posterior (dorsal) relativ zur Frontalebene zu verändern und somit insbesondere einen Abstand der Stützen zu dem Rücken der Bedienperson einzustellen. Besonders vorteilhaft erweist es sich, wenn der ersten und der zweiten Stütze jeweils ein zweiter oberer Verstellmechanismus zugeordnet ist, welcher dazu ausgebildet ist, die obere Verbindungsstelle der jeweiligen Stütze bei angezogener Hilfsvorrichtung in Richtung anterior (ventral) und in Richtung posterior (dorsal) relativ zur Frontalebene zu verlagern. Insofern kann jeder Stütze ein eigener erster oberer Verstellmechanismus und/oder ein zweiter oberer Verstellmechanismus zugeordnet sein.

Der zweite obere Verstellmechanismus kann insbesondere drei zueinander verstellbare Segmente umfassen, wobei ein erstes Segment mit der oberen Kraftverteilereinrichtung, insbesondere dem oberen Grundkörper, verbunden ist, und wobei ein zweites Segment mit der jeweiligen Stütze, insbesondere über die obere Gelenkeinrichtung, verbunden ist. Ein drittes Segment ist dann insbesondere zwischen dem ersten und dem zweiten Segment angeordnet und schwenkbeweglich mit dem ersten Segment und schwenkbeweglich mit dem zweiten Segment verbunden. Vorzugsweise ist der zweite obere Verstellmechanismus derart ausgebildet, dass das erste Segment und das zweite Segment stets zueinander parallel ausgerichtet sind. Eine solche Ausgestaltung ermöglich es, einen Abstand der oberen Verbindungsstellen zu dem Rücken auf einfache Weise einzustellen.

Im Rahmen einer vorteilhaften Ausgestaltung kann der Auslegerabschnitt der ersten Stütze schwenkbar mit dem Rückenabschnitt der ersten Stütze verbunden sein und der Auslegerabschnitt der zweiten Stütze kann schwenkbar mit dem Rückenabschnitt der zweiten Stütze verbunden sein. Vorzugsweise ist der jeweilige Auslegerabschnitt um eine zu der Längsachse des Rückenabschnitts parallele erste, insbesondere vertikale, Auslegerschwenkachse schwenkbar an dem jeweiligen Rückenabschnitt angeordnet. Dies ermöglicht es, den Auslegerabschnitt bei angezogener Hilfsvorrichtung nach links oder rechts zu verschwenken, insbesondere ohne, dass der Rückenabschnitt mit verschwenkt werden muss. Alternativ oder zusätzlich kann der jeweilige Auslegerabschnitt um eine zu der Längsachse des Rückenabschnitts und zu einer Längsachse des Auslegerabschnitts orthogonale, insbesondere horizontale, zweite Auslegerschwenkachse schwenkbar an dem Rückenabschnitt angeordnet sein. Dies ermöglicht es, den Auslegerabschnitt "nach oben" oder "nach unten" zu verschwenken, insbesondere ohne, dass der Rückenabschnitt mit verschwenkt werden muss.

Um ein unerwünschtes Verstellen der Hilfsvorrichtung nach erfolgreicher Anpassung an die Anatomie der Bedienperson, bspw. während eines Arbeitsprozesses, zu verhindern, kann es außerdem vorteilhaft sein, wenn die Hilfsvorrichtung eine Feststelleinrichtung zur Feststellung einer Relativposition der ersten und zweiten unteren Verbindungsstellen und/oder eine Feststelleinrichtung zur Feststellung einer Relativposition der ersten und zweiten oberen Verbindungsstellen umfasst.

Außerdem kann es zum Anziehen der Hilfsvorrichtung vorteilhaft sein, wenn die Gelenkfreiheitsgrade der oberen Gelenkeinrichtungen und/oder die Gelenkfreiheitsgrade der optionalen unteren Gelenkeinrichtungen sperrbar und somit die Stützen in einer vorgegebenen Rastposition feststellbar sind. Zu diesem Zweck kann die Hilfsvorrichtung eine Feststelleinrichtung zur Feststellung der ersten und zweiten unteren Gelenkeinrichtungen und/oder eine Feststelleinrichtung zur Feststellung der ersten und zweiten oberen Gelenkeinrichtungen umfassen.

Die Erfindung wird im Folgenden anhand der Figuren näher erläutert. Es zeigen:
Fig. 1 vereinfachte schematische Darstellung einer Ausgestaltung einer Hilfsvorrichtung;
Fig. 2 vereinfachte schematische Darstellung zur Erläuterung eines Benutzungszustands der Hilfsvorrichtung;
Fig. 3 vereinfachte schematische Darstellung einer unteren Körperanbindung der Hilfsvorrichtung in einer Vorderansicht;
Fig. 4 vereinfachte schematische Darstellung einer Baugruppe der unteren Körperanbindung gemäß Fig. 3 in einer perspektivischen Rückansicht;
Fig. 5 vereinfachte schematische Darstellung der Hilfsvorrichtung in einer Seitenansicht;
Fig. 6 skizzierte Darstellung einer Ausgestaltung der unteren Körperanbindung in einer perspektivischen Rückansicht;
Fig. 7a-c skizzierte Darstellungen einer weiteren Ausgestaltung der unteren Körperanbindung in verschiedenen Ansichten;
Fig. 8 skizzierte Darstellung der unteren Körperanbindung gemäß Fig. 7a-c in einer Draufsicht;
Fig. 9 vereinfachte schematische Darstellung einer oberen Körperanbindung der Hilfsvorrichtung in einer Draufsicht;
Fig. 10 vereinfachte schematische Darstellung einer Körperanbindungseinrichtung der oberen Körperanbindung;
Fig. 11 vereinfachte schematische Darstellung einer Ausgestaltung der oberen Körperanbindung in einer Vordersicht;
Fig. 12 skizzierte Darstellung einer Ausgestaltung der oberen Körperanbindung in einer Hintersicht; und
Fig. 13 vereinfachte schematische Darstellung der Hilfsvorrichtung zur Erläuterung der Verstellbarkeit.

In der nachfolgenden Beschreibung sowie in den Figuren sind für identische oder einander entsprechende Merkmale jeweils dieselben Bezugszeichen verwendet.

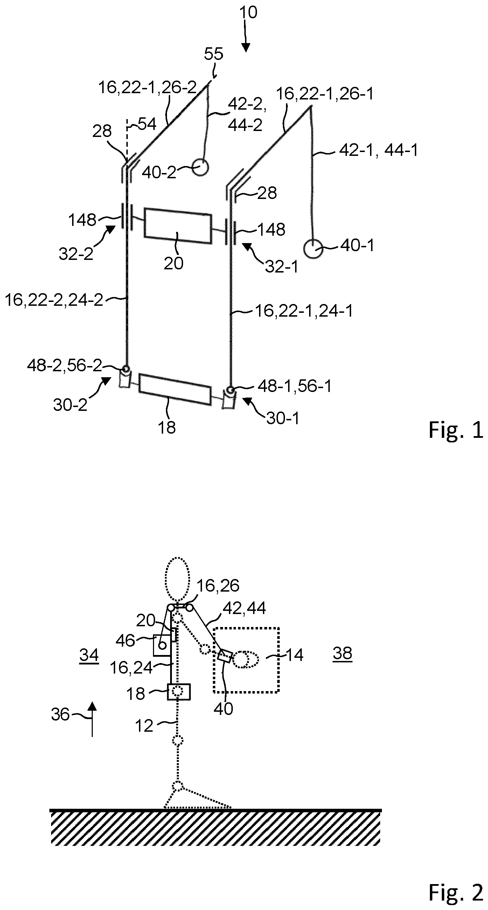

Die Figur 1 zeigt in vereinfachter schematischer Darstellung eine anziehbare Hilfsvorrichtung, welche insgesamt mit dem Bezugszeichen 10 bezeichnet ist. Die Hilfsvorrichtung 10 ist dazu ausgebildet, eine Bedienperson 12 beim Anheben und/oder Tragen einer Last 14 zu unterstützen (vgl. Fig. 2). Wie nachfolgend noch im Detail erläutert, ist die Hilfsvorrichtung 10 im Sinne einer mobilen Vorrichtung ausgebildet, welche von der Bedienperson 12 angezogen und transportiert werden kann.

Die Hilfsvorrichtung 10 umfasst eine Stützstruktur 16, welche dazu ausgebildet ist, eine Tragkraft, insbesondere die Gewichtskraft und/oder Trägheitskraft einer von der Bedienperson 12 gehaltenen Last 14, aufzunehmen und in bestimmte Körperbereiche der Bedienperson 12 abzuleiten. Zu diesem Zweck umfasst die Hilfsvorrichtung 10 außerdem eine untere Körperanbindung 18 zur Ankopplung der Stützstruktur 16 an einen Becken-, Hüft- und/oder Lendenbereich der Bedienperson 12 und eine obere Körperanbindung 20 zur Ankopplung der Stützstruktur 16 an einen Oberkörper der Bedienperson 12 (vgl. Fig. 1 und 2).

Die Stützstruktur 16 umfasst eine erste (rechte) Stütze 22-1 und eine zweite (linke) Stütze 22-2. Wie aus Fig. 1 ersichtlich, umfassen die Stützen 22-1, 22-2 jeweils einen Rückenabschnitt 24-1, 24-2 und einen Auslegerabschnitt 26-1, 26-2. In dem dargestellten Beispiel sind die Rückenabschnitte 24-1, 24-2 mit den Auslegerabschnitten 26-1, 26-2 über nur schematisch angedeutete Stützenverbinder 28 miteinander verbunden. Es ist auch denkbar, dass die Rückenabschnitte 24-1, 24-2 mit den entsprechenden Auslegerabschnitten 26-1, 26-2 einstückig ausgebildet sind. Es ist auch denkbar, dass die Auslegerabschnitte 26-1, 26-2 über entsprechende Auslegergelenke (nicht dargestellt) schwenkbar mit den entsprechenden Rückenabschnitten 24-1, 24-2 verbunden sind. Beispielsweise kann das Auslegergelenk jeweils derart ausgebildet sein, dass der jeweilige Auslegerabschnitt 26-1, 26-2 um eine zu der Längsachse 54 des Rückenabschnitts 24-1, 24-2 parallele erste, insbesondere vertikale, Auslegerschwenkachse schwenkbar ist und/oder um eine zu der Längsachse 54 des Rückenabschnitts 24-1, 24-2 und zu einer Längsachse 55 des Auslegerabschnitts 26-1, 26-2 orthogonale, insbesondere horizontale, zweite Auslegerschwenkachse, schwenkbar ist.

Wie in Fig. 1 schematisch dargestellt, ist die erste Stütze 22-1 an einer ersten unteren Verbindungsstelle 30-1 mit der unteren Körperanbindung 18 verbunden und an einer ersten oberen Verbindungsstelle 32-1 mit der oberen Körperanbindung 20 verbunden. Die zweite Stütze 22-2 ist dementsprechend an einer zweiten unteren Verbindungsstelle 30-2 mit der unteren Körperanbindung 18 verbunden und an einer zweiten oberen Verbindungsstelle 32-2 mit der oberen Körperanbindung 20 verbunden (nachfolgend noch im Detail erläutert).

Wie aus Fig. 2 ersichtlich, ist die Hilfsvorrichtung 10 derart ausgebildet, dass dann, wenn die Hilfsvorrichtung 10 von der Bedienperson 12 angezogen ist, die Rückenabschnitte 24-1, 24-2 posterior, also an einer Rückseite 34 der Bedienperson 12, angeordnet sind und sich cranial (vgl. Pfeil 36 in Fig. 2) von der unteren Körperanbindung 18 entlang der Rückenpartie der Bedienperson 12 erstreckt (in Fig. 2 beispielhaft vertikal). Die Auslegerabschnitte 26-1, 26-2 sind derart ausgebildet, dass sie sich bei angezogener Hilfsvorrichtung 10 von posterior nach anterior, also von der Rückseite 34 zu einer Vorderseite 38 der Bedienperson 12 hin, erstrecken, insbesondere über eine Schulter der Bedienperson.

In dem dargestellten Beispiel sind die Rückenabschnitte 24-1, 24-2 und die Auslegerabschnitte 26-1, 26-2 orthogonal zueinander ausgebildet. Bei nicht dargestellten Ausgestaltungen sind jedoch auch andere Ausgestaltungen denkbar. Beispielsweise ist es denkbar, dass sich der jeweilige Auslegerabschnitt 26-1, 26-2 an den Rückenabschnitt 24-1, 24-2 anschließt und eine Krümmung derart aufweist, dass der Auslegerabschnitt 26-1, 26-2 bei angezogener Hilfsvorrichtung 10 sich von anterior nach posterior erstreckt.

Die Hilfsvorrichtung 10 umfasst außerdem eine erste Handanbindung 40-1 zur Anbindung an einen rechten Hand-oder Unterarmbereich der Bedienperson 12 und eine zweite Handanbindung 40-2 zur Anbindung an einen linken Hand-oder Unterarmbereich der Bedienperson 12. Wie in Fig. 1 schematisch dargestellt, ist die erste Handanbindung 40-1 mit dem Auslegerabschnitt 26-1 der ersten Stütze 22-1 über eine erste, insbesondere längenveränderbare, Verbindungseinrichtung 42-1 verbunden. Die zweite Handanbindung 40-2 ist mit dem Auslegerabschnitt 26-2 der zweiten Stütze 22-2 über eine zweite, insbesondere längenveränderbare, Verbindungseinrichtung 42-2 verbunden. Beispielhaft und bevorzugt kann es sich bei der Verbindungseinrichtung 42-1, 42-2 über um einen angetriebenen Seilzug 44-1, 44-2 handeln. Dann kann die Hilfsvorrichtung 10 außerdem eine gemeinsame oder für jeden Seilzug 44-1, 44-2 eigene Antriebseinrichtung 46 aufweisen, welche vorzugsweise an der Stützstruktur 16 gehaltert ist (vgl. Fig. 2). Die Hilfsvorrichtung 10 kann dann für jeden Seilzug 44-1, 44-2 eine, insbesondere in die Stützen 22 integrierte, Seilführung (nicht dargestellt) umfassen, welche dazu ausgebildet ist, das Seil von der Antriebseinrichtung 46 zu der Handanbindung 40-1, 40-2 zu führen. Insbesondere kann dann das Seil an einem freien Ende des Auslegerabschnitts 26-1, 26-2 über eine Seilumlenkeinrichtung (nicht dargestellt) austreten.

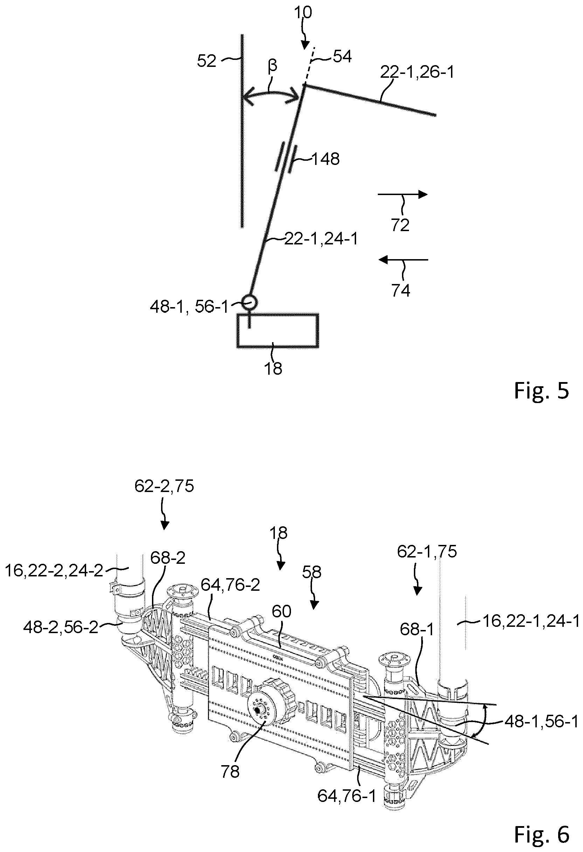

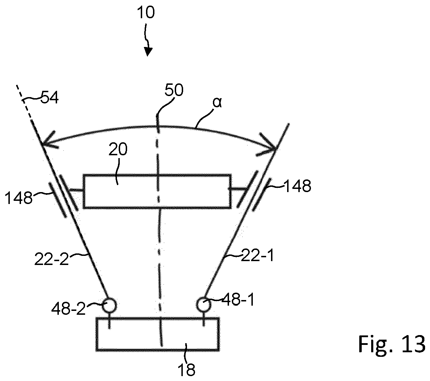

Wie in Fig. 1 schematisch dargestellt, ist die erste Stütze 22-1 an der ersten unteren Verbindungsstelle 30-1 über eine erste untere Gelenkeinrichtung 48-1 mit der unteren Körperanbindung 18 verbunden und die zweite Stütze 22-2 ist an der zweiten unteren Verbindungsstelle 30-2 über eine zweite untere Gelenkeinrichtung 48-2 mit der unteren Körperanbindung 18 verbunden. Die unteren Gelenkeinrichtungen 48-1, 48-2 sind jeweils derart ausgebildet, dass bei angezogener Hilfsvorrichtung 10 ein Neigungswinkel α der jeweiligen Stütze 22-1, 22-2 relativ zu der Medianebene 50 (vgl. Fig. 13) und ein Neigungswinkel β der jeweiligen Stütze 22-1, 22-2 relativ zu der Frontalebene 52 (vgl. Fig. 5) veränderbar ist. Darüber hinaus sind die unteren Gelenkeinrichtungen 48-1, 48-2 derart ausgebildet, dass der jeweilige Rückenabschnitt 24-1, 24-2 der jeweiligen Stütze 22-1, 22-2 um seine Längsachse 54 schwenkbar an der unteren Körperanbindung 18 gehaltert ist. In dem dargestellten Beispiel sind die unteren Gelenkeinrichtungen 48-1, 48-2 als Kugelgelenke 56-1, 56-2 ausgebildet.

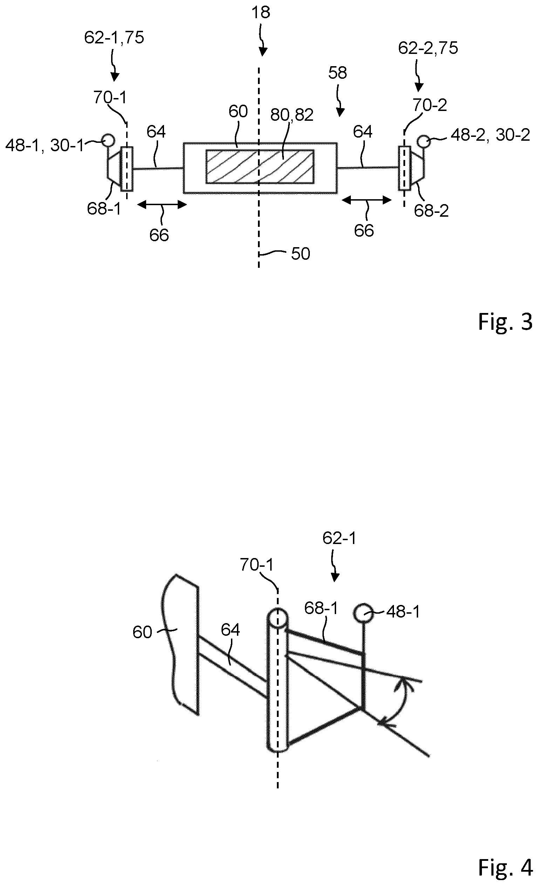

Die Figur 3 zeigt eine vereinfachte schematische Darstellung einer Ausgestaltung der unteren Körperanbindung 18. Wie aus Fig. 3 ersichtlich, umfasst die untere Körperanbindung 18 einen Grundkörper 60, welcher zwischen den Rückenabschnitten 24-1, 24-2 angeordnet ist. Wie in Fig. 4 dargestellt, sind die Stützen 22-1, 22-2 über die unteren Gelenkeinrichtungen 48-1, 48-2 an dem Grundkörper 60 gehaltert, beispielhaft über eine nachfolgend noch im Detail beschriebene Schwenkeinrichtung 62. Der Grundkörper 60 ist Teil einer unteren Kraftverteilereinrichtung 58, welche dazu ausgebildet ist, Kräfte von den Stützen 22-1, 22-2 aufzunehmen und flächig in die Körperanbindung 18 einzuleiten.

Der Grundkörper 60 umfasst einen ersten unteren Verstellmechanismus 64, welcher dazu ausgebildet ist, einen Abstand der unteren Gelenkeinrichtungen 48-1, 48-2 zu dem Grundkörper 60 und somit einen Abstand der Stützen 22-1, 22-2 zueinander zu verändern, insbesondere einzustellen (in Fig. 3 durch die Doppelpfeile 66 dargestellt). Bei angezogener Hilfsvorrichtung 10 ist insofern eine Position der ersten unteren Verbindungsstelle 30-1 und der zweiten unteren Verbindungsstelle 30-2 orthogonal zur Medianebene 50, also medial bzw. lateral, veränderbar, insbesondere einstellbar.

Dem dargestellten Beispiel sind die unteren Gelenkeinrichtungen 48-1, 48-2 jeweils über eine vorstehend bereits erwähnte Schwenkeinrichtung 62-1, 62-2 an dem unteren Grundkörper 60 gehaltert. Wie in Fig. 4 beispielhaft gezeigt, sind die unteren Gelenkeinrichtungen 48-1, 48-2 jeweils an einem Schwenkflügel 68-1, 68-2 gehaltert, welcher schwenkbeweglich um eine Schwenkachse 70-1, 70-2 an dem unteren Grundkörper 60 gehaltert ist. Bei angezogener Hilfsvorrichtung 10 ist die Schwenkachse 70-1, 70-2 insbesondere orthogonal zur Transversalebene (in aufrechter Körperposition) orientiert. Die Schwenkeinrichtungen 62-1, 62-2 ermöglichen es somit, eine Position der unteren Verbindungsstellen 30-1, 30-2 in Richtung anterior (ventral, vgl. Pfeil 72 in Fig. 5) oder in Richtung posterior (dorsal, vgl. Pfeil 74 in Fig. 5) relativ zur Frontalebene 52 zu verändern. Die Schwenkeinrichtungen 62-1, 62-2 bilden insofern einen zweiten unteren Verstellmechanismus 75.

Eine beispielhafte Ausgestaltung der unteren Körperanbindung 18 mit erstem und zweitem unterem Verstellmechanismus 64, 75 ist in Figur 6 gezeigt. Wie aus Fig. 6 ersichtlich, umfasst der erste Verstellmechanismus 64 beispielhaft eine linke und eine rechte Zahnstangeneinrichtung 76-1, 76-2 über welche die mit den unteren Gelenkeinrichtungen 48-1, 48-2 verbundenen Schwenkeinrichtungen 62-1, 62-2 verschieblich an dem Grundkörper 60 gehaltert sind. Vorzugsweise sind die Zahnstangeneinrichtungen 76-1, 76-2 über eine untere Bedieneinheit 78 betätigbar.

Wie in Fig. 3 lediglich abschnittsweise angedeutet, umfasst die untere Körperanbindung 18 außerdem eine flexible untere Körperanbindungseinrichtung 80 zur Anbindung an einen Hüft-, Becken-, und/oder Lendenbereich der Bedienperson 12. Die untere Körperanbindungseinrichtung 80 umfasst insbesondere einen Textilteil 82, über welches die Hilfsvorrichtung 10 mit dem Körper verbunden ist. Beispielsweise kann das Textilteil 82 in Form eines Hüftgurts (nicht dargestellt) ausgebildet sein, welcher einen Hüftbereich der Bedienperson 12 umfasst.

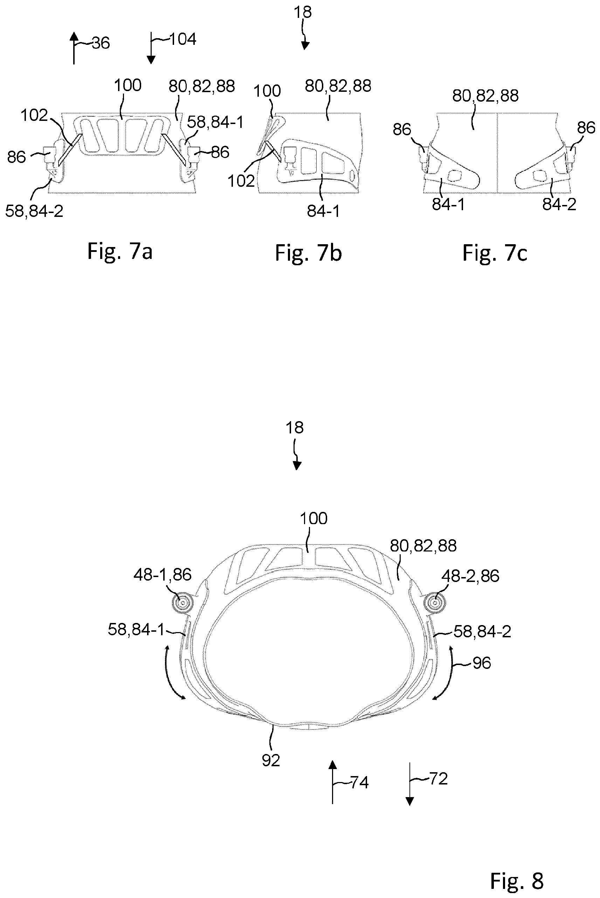

Die Figuren 7a bis 8 zeigen eine weitere beispielhafte Ausgestaltung der unteren Körperanbindung 18. Wie aus Fig. 7c ersichtlich, ist die untere Kraftverteilereinrichtung 58 bei dieser Ausgestaltung durch zwei, vorzugsweise anatomisch geformte, Hüftschalen 84-1, 84-2 gebildet. An den Hüftschalen 84-1, 84-2 sind die unteren Gelenkeinrichtungen 48-1, 48-2 gehaltert. Beispielhaft ist an den Hüftschalen 84-1, 84-2 eine jeweilige Kugelaufnahme 86 der Kugelgelenke 56-1, 56-2 gehaltert. Die Hüftschalen 84-1, 84-2 sind an einem Textilteil 82 angeordnet, welches die untere Körperanbindungseinrichtung 80 bildet. Das Textilteil 82 kann beispielhaft als Gurt oder Hüftband 88 ausgebildet sein. Wie aus Fig. 7c und 8 ersichtlich, sind die Hüftschalen 84-1, 84-2 beispielhaft und bevorzugt derart ausgebildet und an dem Textilteil 82 gehaltert, dass die Hüftschalen 84-1, 84-2 bei angezogener Hilfsvorrichtung 10 derart ventral (vgl. Pfeil 72 in Fig. 8) in einen Leistenbereich 92 der Bedienperson 12 ragen, dass nach dorsal (vgl. Pfeil 74 in Fig. 7) gerichtete Kräfte über die Hüftschalen 84-1, 84-2 in den Körper der Bedienperson 12 einleitbar sind. Die Hüftschalen 84-1, 84-2 sind vorzugsweise derart verschiebbar an dem Textilteil 82 gehaltert, dass durch Verschieben der Hüftschalen 84-1, 84-2 relativ zu dem Textilteil 82 eine Position der unteren Verbindungsstellen 30-1, 30-2 sowohl lateral bzw. medial relativ zur Medianebene 50 als auch anterior bzw. posterior relativ zur Frontalebene 52 veränderbar, insbesondere einstellbar, ist (in Fig. 8 durch den Doppelpfeil 96 angedeutet).

In dem dargestellten Beispiel umfasst die untere Körperanbindung 18 außerdem eine optionale Lordosenstütze 100, welche Teil der unteren Kraftverteilereinrichtung 58 ist. Die Lordosenstütze 100 ist an dem Textilteil 82 gehaltert und über dieses mit den Hüftschalen 84-1, 84-2 kraftgekoppelt. Optional kann die Lordosenstütze 100 zusätzlich über ein oder mehrere elastische Bänder 102 mit den Hüftschalen 84-1, 84-2 verbunden sein (vgl. Fig. 7a). Die Lordosenstütze 100 ist beispielhaft und bevorzugt derart verschiebbar an dem Textilteil 82 gehaltert, dass eine Position der Lordosenstütze 100 nach cranial (vgl. Pfeil 36 in Fig. 7a) bzw. caudal (vgl. Pfeil 104 in Fig. 7a) veränderbar, insbesondere einstellbar, ist.

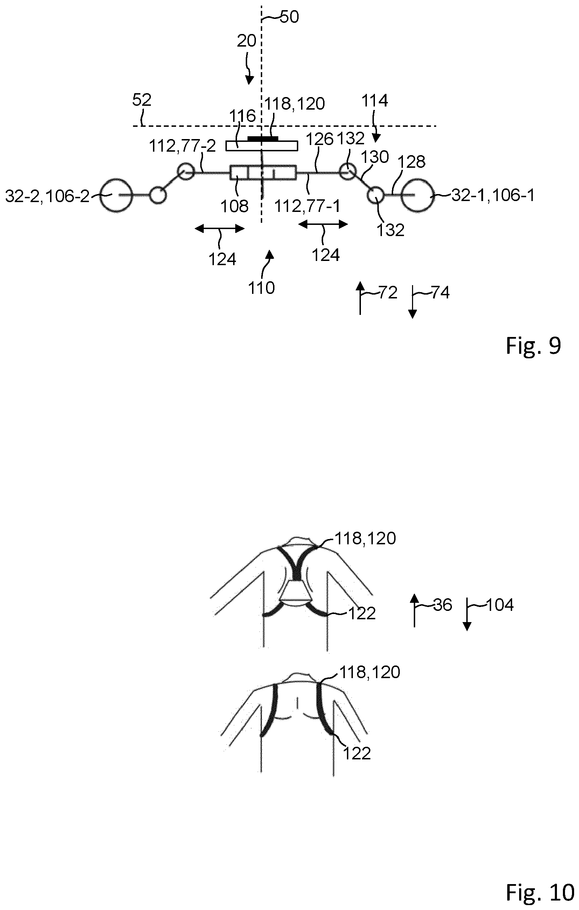

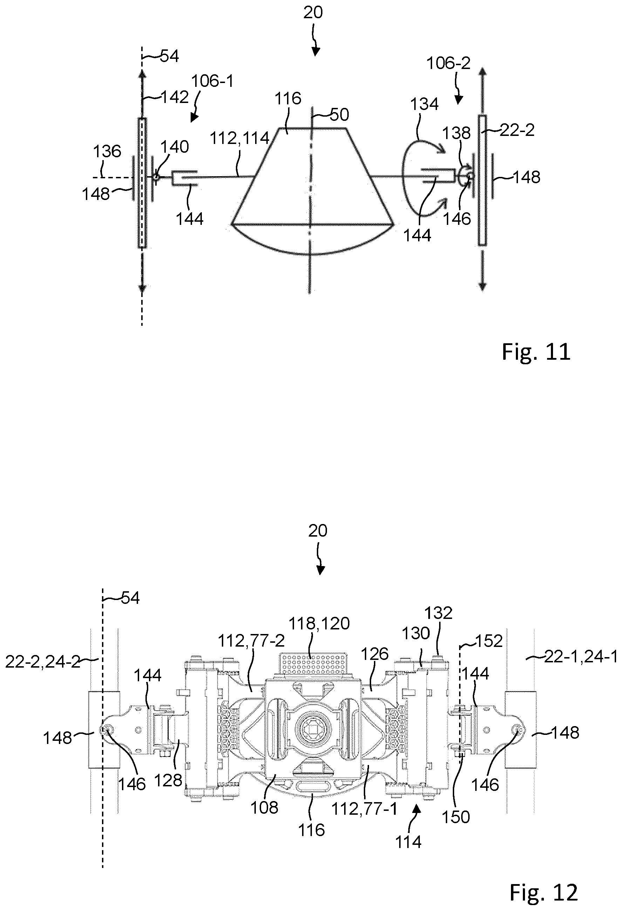

Die Figur 9 zeigt in vereinfachter schematischer Darstellung eine beispielhafte Ausgestaltung der oberen Körperanbindung 20 in einer Draufsicht. Wie in Fig. 9 lediglich schematisch dargestellt, ist die erste Stütze 22-1 an der ersten oberen Verbindungsstelle 32-1 optional über eine erste obere Gelenkeinrichtung 106-1 mit der oberen Körperanbindung 20 verbunden und die zweite Stütze 22-2 ist optional an der zweiten oberen Verbindungsstelle 32-2 über eine zweite obere Gelenkeinrichtung 106-2 mit der oberen Körperanbindung 20 verbunden (nachfolgend in Bezug auf Fig. 11 noch im Detail beschrieben).

In dem dargestellten Beispiel umfasst die obere Körperanbindung 20 einen oberen Grundkörper 108, welcher zwischen den Rückenabschnitten 24-1, 24-2 angeordnet ist. Der Grundkörper 108 ist Teil einer oberen Kraftverteilereinrichtung 110, welche dazu ausgebildet ist, Kräfte von den Stützen 22-1, 22-2 aufzunehmen und umzuleiten. Die oberen Gelenkeinrichtungen 106-1, 106-2 sind jeweils über einen ersten und einen zweiten Verstellmechanismus 112, 114 mit dem oberen Grundkörper 108 verbunden (nachfolgend im Detail beschrieben).

Die obere Körperanbindung 20 umfasst außerdem eine Krafteinleitungsplatte 116, welche ebenfalls Teil der oberen Kraftverteilereinrichtung 110 ist. Beispiel und bevorzugt ist die Krafteinleitungsplatte 116 derart verschiebbar an dem oberen Grundkörper 108 gehaltert, dass ein Abstand zwischen oberem Grundkörper 108 und Krafteinleitungsplatte 116 und somit ein Abstand zwischen oberem Grundkörper 108 und Rücken veränderbar, insbesondere einstellbar, ist.

Wie in Fig. 10 beispielhaft dargestellt, ist die Krafteinleitungsplatte 116 mit einem Gurtsystem 118 verbunden, über welches die Hilfsvorrichtung 10 mit einem Oberkörper der Bedienperson 12 verbunden werden kann. Das Gurtsystem 118 bildet insofern eine obere Körperanbindungseinrichtung 120. Beispielhaft und bevorzugt umfasst das Gurtsystem 118 mehrere Gurte 122, welche vorzugsweise aus Textil hergestellt sein können. Wie in Fig. 10 dargestellt, kann das Gurtsystem 118 beispielhaft derart ausgebildet sein, dass die Hilfsvorrichtung 10 rucksackartig anziehbar ist. Insbesondere kann die Krafteinleitungsplatte 116 derart verschiebbar mit dem Gurtsystem 118 verbunden sein, dass eine Position der Krafteinleitungsplatte 116 und somit eine Position der oberen Körperanbindung 20 cranial 36 bzw. caudal 104 veränderbar ist.

Wie vorstehend bereits erwähnt, umfasst die obere Körperanbindung einen ersten Verstellmechanismus 112, welcher dazu ausgebildet ist, einen Abstand zwischen erster und zweiter oberer Gelenkeinrichtung 106-1, 106-2 zu verändern (in Fig. 9 durch die Doppelpfeile 124 angedeutet). Beispielsweise ist es denkbar, dass der obere Grundkörper 108 einen ähnlichen Zahnstangenmechanismus aufweist wie der untere Grundkörper 60 (vgl. Fig. 6 und obige Beschreibung). Insofern kann der erste obere Verstellmechanismus 112 eine linke und eine rechte Zahnstange 77-1, 77-2 umfassen, über welche die Stützen 22-1, 22-2 verschieblich an dem Grundkörper 108 gehaltert sind (vgl. auch Fig. 6).

Die obere Körperanbindung 20 umfasst in dem dargestellten Beispiel außerdem einen zweiten oberen Verstellmechanismus 114, welcher dazu ausgebildet ist, eine Position der oberen Gelenkeinrichtungen 106-1, 106-2 nach anterior (vgl. Pfeil 72 in Fig. 9) bzw. posterior (vgl. Pfeil 74 in Fig. 9) relativ zur Frontalebene 52 zu verändern, insbesondere einzustellen. Eine beispielhafte Ausgestaltung des zweiten oberen Verstellmechanismus 114 ist in Fig. 9 nur schematisch angedeutet. Beispielhaft umfasst der zweite obere Verstellmechanismus 114 drei Segmente 126, 128, 130, wobei das erste Segment 126 mit dem oberen Grundkörper 108 verbunden ist. Beispielhaft kann es sich bei dem ersten Segment um die Zahnstange 77-1, 77-2 des ersten oberen Verstellmechanismus 112 handeln. Das zweite Segment 128 ist mit der oberen Gelenkeinrichtung 106-1, 106-2 verbunden. Das dritte Segment 130 ist zwischen dem ersten und dem zweiten Segment 126, 128 angeordnet und sowohl mit dem ersten Segment 126, als auch mit dem zweiten Segment 128 über eine Schwenkverbindung 132 verbunden. Beispielhaft ist der zweite obere Verstellmechanismus 114 derart ausgebildet, dass das erste Segment 126 und das zweite Segment 128 stets zueinander parallel ausgerichtet sind.

Die Figur 11 zeigt eine beispielhafte Ausgestaltung der oberen Körperanbindung 20, anhand derer eine Ausgestaltung der optionalen oberen Gelenkeinrichtungen 106-1, 106-2 erläutert werden soll. In dem dargestellten Beispiel umfassen die oberen Gelenkeinrichtungen 106-1, 106-2 jeweils drei Gelenkfreiheitsgrade auf. Im Konkreten umfassen die oberen Gelenkeinrichtungen 106-1, 106-2 jeweils einen ersten Schwenkfreiheitsgrad (in Fig. 11 durch den Pfeil 134 angedeutet) um eine erste Schwenkachse 136. Die oberen Gelenkeinrichtungen 106-1, 106-2 umfassen außerdem jeweils einen zweiten Schwenkfreiheitsgrad (in Fig. 11 durch den Pfeil 138 angedeutet) um eine zu der ersten Schwenkachse 136 orthogonale zweite Schwenkachse 140. Darüber hinaus umfassen die oberen Gelenkeinrichtungen 106-1, 106-2 jeweils einen translatorischen Freiheitsgrad (in Fig. 11 durch den Doppelpfeil 142 angedeutet) entlang einer Längsachse 54 der Stütze 22-1, 22-2. Bei angezogener Hilfsvorrichtung 10 ist die erste Schwenkachse 136 insbesondere orthogonal zu der Medianebene 50 orientiert und die zweite Schwenkachse 140 ist orthogonal zu der Frontalebene 52 (in Fig. 11 der Zeichenebene entsprechend) orientiert.

In dem dargestellten Beispiel ist der erste Schwenkfreiheitsgrad durch ein erstes Schwenkgelenk 144 bereitgestellt, welches über den ersten und zweiten oberen Verstellmechanismus 112, 114 (in Fig. 11 nicht im Detail dargestellt) mit dem oberen Grundkörper 108 verbunden ist (vgl. auch Fig. 9). Der zweite Schwenkfreiheitsgrad ist durch ein zweites Schwenkgelenk 146 bereitgestellt, welches mit dem ersten Schwenkgelenk 144 verbunden ist. Der translatorische Freiheitsgrad ist durch eine Verschiebehülse 148 bereitgestellt, welche mit dem zweiten Schwenkgelenk 146 verbunden ist und in welcher die jeweilige Stütze 22-1, 22-2 entlang der Längsachse 54 verlagerbar aufgenommen ist. Vorzugsweise ist die Verschiebehülse 148 derart ausgebildet, dass die Stütze 22-1, 22-2 um ihre Längsachse 54 schwenkbar in der Verschiebehülse 148 aufgenommen ist. Vorzugsweise ist die obere Körperanbindung 20 symmetrisch in Bezug auf die Medianebene 50 ausgebildet.

Eine beispielhafte Ausgestaltung einer vorstehend beschriebenen oberen Körperanbindung ist in Fig. 12 gezeigt, wobei für identische oder einander entsprechende Merkmale die gleichen Bezugszeichen verwendet sind. In dem dargestellten Beispiel umfassen die oberen Gelenkeinrichtungen 106-1, 106-2 jeweils zusätzlich ein optionales drittes Schwenkgelenk 150 um eine zu der ersten und zweiten Schwenkachse 136, 140 orthogonalen dritten Schwenkachse 152.

Eine besonders vorteilhafte Wirkung der Hilfsvorrichtung 10 ergibt sich bei einem Zusammenspiel von unterer und oberer Körperanbindung 18, 20. Wie in Fig. 13 schematisch dargestellt, ermöglicht es die Verstellbarkeit der unteren und oberen Körperanbindung 18, 20 in Kombination mit den gelenkigen Verbindungen der Stützen 22-1, 22-2 mit der unteren und oberen Körperanbindung 18, 20, die Hilfsvorrichtung 10 flexibel an unterschiedliche Körperanatomien anzupassen. Beispielsweise ist es denkbar, Körperanatomien mit schmaler Hüfte und breitem Rücken nachzubilden (vgl. Fig. 13) und gleichzeitig eine hohe Bewegungsfreiheit der Bedienperson 12 zu erzielen, bspw. eine Rumpfbeuge zu ermöglichen (vgl. Fig. 5).

## Patentansprüche

1. Anziehbare Hilfsvorrichtung (10) zur Unterstützung beim Anheben und/oder Halten von Lasten (14) durch eine Bedienperson (12), umfassend
- eine Stützstruktur (16) mit einer ersten Stütze (22-1) und einer zweiten Stütze (22-2), wobei die erste Stütze (22-1) und die zweite Stütze (22-2) jeweils einen Rückenabschnitt (24-1, 24-2) und einen Auslegerabschnitt (26-1, 26-2) derart aufweisen, dass dann, wenn die Hilfsvorrichtung (10) von der Bedienperson (12) angezogen ist, der Rückenabschnitt (24-1, 24-2) posterior angeordnet ist und im Wesentlichen entlang der Rückenpartie der Bedienperson (12) verläuft und der Auslegerabschnitt (26-1, 26-2) sich von posterior nach anterior erstreckt;
- eine untere Körperanbindung (18) zur Ankopplung der Stützstruktur (16) an einen Becken-, Hüft- und/oder Lendenbereich der Bedienperson (12);
- eine obere Körperanbindung (20) zur Ankopplung der Stützstruktur (16) an einen Oberkörper der Bedienperson (12), insbesondere an einen Rücken-, Schulter-, und/oder Brustbereich;
- eine erste Handanbindung (40-1) zur Anbindung an einen rechten Hand- oder Unterarmbereich der Bedienperson (12), wobei die erste Handanbindung (40-1) mit der ersten Stütze (22-1) über eine erste längenveränderbare Verbindungseinrichtung (42-1) verbunden ist;
- eine zweite Handanbindung (40-2) zur Anbindung an einen linken Hand- oder Unterarmbereich der Bedienperson (12), wobei die zweite Handanbindung (40-2) mit der zweiten Stütze (22-2) über eine zweite längenveränderbare Verbindungseinrichtung (42-2) verbunden ist,
wobei die erste Stütze (22-1) an einer ersten unteren Verbindungsstelle (30-1) über eine erste untere Gelenkeinrichtung (48-1) mit der unteren Körperanbindung (18) verbunden ist und wobei die zweite Stütze (22-2) an einer zweiten unteren Verbindungsstelle (30-2) über eine zweite untere Gelenkeinrichtung (48-2) mit der unteren Körperanbindung (18) verbunden ist,
wobei die erste untere Gelenkeinrichtung (48-1) und die zweite untere Gelenkeinrichtung (48-2) jeweils wenigstens zwei Gelenkfreiheitsgrade aufweisen.

2. Anziehbare Hilfsvorrichtung (10) nach Anspruch 1, wobei die erste untere Gelenkeinrichtung (48-1) und die zweite untere Gelenkeinrichtung (48-2) jeweils derart ausgebildet sind, dass bei angezogener Hilfsvorrichtung (10) ein Neigungswinkel (α) der Stütze (22-1, 22-2) relativ zu der Medianebene (50) und/oder ein Neigungswinkel (β) der Stütze (22-1, 22-2) relativ zu der Frontalebene (52), insbesondere voneinander unabhängig, veränderbar, insbesondere einstellbar, sind.

3. Anziehbare Hilfsvorrichtung (10) nach einem der vorherigen Ansprüche, wobei die erste Stütze (22-1) und die zweite Stütze (22-2) jeweils über ein Kugelgelenk (56-1, 56-2) mit der unteren Körperanbindung (18) verbunden sind.

4. Anziehbare Hilfsvorrichtung (10) nach einem der vorherigen Ansprüche, wobei die untere Körperanbindung (18) derart ausgebildet ist, dass eine Relativposition von erster unterer Verbindungsstelle (30-1) und zweiter unterer Verbindungsstelle (30-2) veränderbar ist, insbesondere eine Position der ersten unteren Verbindungsstelle (30-1) und/oder der zweiten unteren Verbindungsstelle (30-2) bei angezogener Hilfsvorrichtung (10) lateral und medial relativ zur Medianebene (50) und/oder in Richtung anterior und in Richtung posterior relativ zur Frontalebene (52), insbesondere voneinander unabhängig, veränderbar, weiter insbesondere einstellbar, ist.

5. Anziehbare Hilfsvorrichtung (10) nach einem der vorherigen Ansprüche, wobei die untere Körperanbindung (18) eine untere Kraftverteilereinrichtung (58) umfasst, welche mit den Stützen (22-1, 22-2), insbesondere über die unteren Gelenkeinrichtungen (48-1, 48-2), verbunden ist, und wobei die untere Körperanbindung (18) eine mit der unteren Kraftverteilereinrichtung (58) verbundene flexible untere
Körperanbindungseinrichtung (80) zur Anbindung an einen Körperbereich der Bedienperson (12) umfasst, insbesondere wobei die untere Körperanbindungseinrichtung (80) wenigstens ein Textilteil (82) umfasst, weiter insbesondere in Form eines Gurtes, Gurtsystems oder einer Manschette.

6. Anziehbare Hilfsvorrichtung (10) nach Anspruch 5, wobei die untere Kraftverteilereinrichtung (58) einen unteren Grundkörper (60) aufweist, welcher sich zwischen der ersten Stütze (22-1) und der zweiten Stütze (22-2) erstreckt und an welchem die unteren Gelenkeinrichtungen (48-1, 48-2) angeordnet sind,, wobei der untere Grundköper (60) einen ersten unteren Verstellmechanismus (64) umfasst, welcher dazu ausgebildet ist, einen Abstand der unteren Verbindungsstellen (30-1, 30-2) zu verändern, insbesondere einzustellen, weiter insbesondere die Position der unteren Verbindungsstellen (30-1, 30-2) lateral und medial relativ zur Medianebene (50) zu verändern.

7. Anziehbare Hilfsvorrichtung nach einem der vorherigen Ansprüche, wobei die unteren Gelenkeinrichtungen (48-1, 48-2) jeweils über eine Schwenkeinrichtung (62-1, 62-2) an der unteren Körperanbindung (18), insbesondere an dem unteren Grundkörper (60) gehaltert sind, wobei die Schwenkeinrichtung (62-1, 62-2) dazu ausgebildet ist, eine Position der unteren Gelenkeinrichtungen (48-1, 48-2) in Richtung anterior oder in Richtung posterior relativ zur Frontalebene (52) zu verändern.

8. Anziehbare Hilfsvorrichtung (10) nach Anspruch 5, wobei die untere Kraftverteilereinrichtung (58) eine erste Hüftschale (84-1) zur Anlage an einen rechten Hüftbereich der Bedienperson (12) und eine zweite Hüftschale (84-2) zur Anlage an einen linken Hüftbereich der Bedienperson (12) umfasst, wobei die erste Stütze (22-1) über die erste untere Gelenkeinrichtung (48-1) mit der ersten Hüftschale (84-1) verbunden ist und wobei die zweite Stütze (22-2) über die zweite untere Gelenkeinrichtung (48-2) mit der zweiten Hüftschale (84-2) verbunden ist, insbesondere wobei die Hüftschalen (84-1, 84-2) derart ausgebildet sind, dass bei angezogener Hilfsvorrichtung (10) die Hüftschalen (84-1, 84-2) derart ventral in einen Leistenbereich (92) der Bedienperson (12) ragen, dass nach dorsal gerichtete Kräfte über die Hüftschalen (84-1, 84-2) in den Körper der Bedienperson (12) einleitbar sind.

9. Anziehbare Hilfsvorrichtung (10) nach Anspruch 8, wobei die erste und die zweite Hüftschale (84-1, 84-2) verschiebbar an der unteren Körperanbindungseinrichtung (18), insbesondere an dem wenigstens einen Textilteil (82), gehaltert sind, insbesondere derart, dass durch Verschieben der ersten und/oder der zweiten Hüftschale (84-1, 84-2) relativ zu der unteren Körperanbindungseinrichtung (18) ein Abstand der unteren Verbindungsstellen (30-1, 30-2) relativ zueinander, insbesondere eine Position der unteren Verbindungsstellen (30-1, 30-2) lateral und medial relativ zur Medianebene (50) und/oder in Richtung anterior und in Richtung posterior relativ zur Frontalebene (52), veränderbar, insbesondere einstellbar, ist.

10. Anziehbare Hilfsvorrichtung (10) nach einem der vorherigen Ansprüche, wobei die erste Stütze (22-1) an einer ersten oberen Verbindungsstelle (32-1), insbesondere gelenkig, weitere insbesondere über eine erste obere Gelenkeinrichtung (106-1), mit der oberen Körperanbindung (20) verbunden ist und wobei die zweite Stütze (22-2) an einer zweiten oberen Verbindungsstelle (32-2), insbesondere gelenkig, weiter insbesondere über eine zweite obere Gelenkeinrichtung (106-2), mit der oberen Körperanbindung (20) verbunden ist.

11. Anziehbare Hilfsvorrichtung (10) nach Anspruch 10, wobei die erste obere Gelenkeinrichtung (106-1) und die zweite obere Gelenkeinrichtung (106-2) jeweils mindestens drei Gelenkfreiheitsgrade aufweisen.

12. Anziehbare Hilfsvorrichtung (10) nach einem der Ansprüche 10 oder 11, wobei die erste obere Gelenkeinrichtung (106-1) und die zweite obere Gelenkeinrichtung (106-2) jeweils aufweisen:
a. einen ersten Schwenkfreiheitsgrad um eine, insbesondere bei angezogener Hilfsvorrichtung (10) zu der Medianebene (50) orthogonale, erste Schwenkachse (136);
b. einen zweiten Schwenkfreiheitsgrad um eine zu der ersten Schwenkachse (136) orthogonale, insbesondere bei angezogener Hilfsvorrichtung (10) zu der Frontalebene (52) orthogonale, zweite Schwenkachse (140);
c. einen translatorischen Freiheitsgrad entlang einer Längsachse (54) der Stütze (22-1, 22-2), insbesondere entlang einer Längsachse (54) des Rückenabschnitts (24-1, 24-2) der Stütze (22-1, 22-2) .

13. Anziehbare Hilfsvorrichtung (10) nach einem der vorherigen Ansprüche, wobei die obere Körperanbindung (20) eine obere Kraftverteilereinrichtung (110) umfasst, welche mit den Stützen (22-1, 22-2), insbesondere über die oberen Gelenkeinrichtungen (106-1, 106-2), verbunden ist, und wobei die obere Körperanbindung (20) eine mit der oberen Kraftverteilereinrichtung (110) verbundene flexible obere Körperanbindungseinrichtung (120) zur Anbindung an einen Oberkörperbereich der Bedienperson (12) umfasst, insbesondere wobei die obere Körperanbindungseinrichtung (120) wenigstens ein Textilteil (122) umfasst, weiter insbesondere in Form eines Gurtes, Gurtsystems (118) oder einer Manschette.

14. Anziehbare Hilfsvorrichtung (10) nach einem der Ansprüche 10 bis 13, wobei die obere Körperanbindung (20) derart ausgebildet ist, dass eine Relativposition von erster oberer Verbindungsstelle (32-1) und zweiter oberer Verbindungsstelle (32-2) veränderbar ist, insbesondere eine Position der ersten oberen Verbindungsstelle (32-1) und/oder der zweiten oberen Verbindungsstelle (32-2) bei angezogener Hilfsvorrichtung (10) lateral und medial relativ zur Medianebene (50) und/oder in Richtung anterior und in Richtung posterior relativ zur Frontalebene (52), insbesondere voneinander unabhängig, veränderbar, insbesondere einstellbar, ist.

15. Anziehbare Hilfsvorrichtung nach einem der Ansprüche 10 bis 14, wobei die obere und die untere Körperanbindung (18, 20) derart ausgebildet sind, dass eine Relativposition der oberen Verbindungsstellen (32-1, 32-2) und eine Relativposition der unteren Verbindungsstellen (30-1, 30-2) voneinander unabhängig veränderbar, insbesondere einstellbar, sind.

## Claims

1. Wearable aid (10) for assisting in lifting and/or holding of loads (14) by an operator (12), comprising
- a support structure (16) having a first support (22-1) and a second support (22-2), wherein the first support (22-1) and the second support (22-2) each have a back portion (24-1, 24-2) and an extension arm portion (26-1, 26-2) such that, when the aid (10) is worn by the operator (12), the back portion (24-1, 24-2) is arranged posteriorly and extends substantially along the back of the operator (12) and the extension arm portion (26-1, 26-2) extends from posterior to anterior;
- a lower body attachment (18) for coupling the support structure (16) to a pelvic, hip and/or lumbar region of the operator (12);
- an upper body attachment (20) for coupling the support structure (16) to an upper body of the operator (12), in particular to a back, shoulder and/or chest region;
- a first hand attachment (40-1) for being attached to a right hand or forearm region of the operator (12), wherein the first hand attachment (40-1) is connected to the first support (22-1) via a first length-adjustable connecting device (42-1);
- a second hand attachment (40-2) for being attached to a left hand or forearm region of the operator (12), wherein the second hand attachment (40-2) is connected to the second support (22-2) via a second length-adjustable connecting device (42-2),
wherein the first support (22-1) is connected to the lower body attachment (18) at a first lower connecting point (30-1) via a first lower joint device (48-1) and wherein the second support (22-2) is connected to the lower body attachment (18) at a second lower connecting point (30-2) via a second lower joint device (48-2),
wherein the first lower joint device (48-1) and the second lower joint device (48-2) each have at least two degrees of joint freedom.

2. Wearable aid (10) according to claim 1, wherein the first lower joint device (48-1) and the second lower joint device (48-2) are each designed such that, when the aid (10) is worn, an angle of inclination (α) of the support (22-1, 22-2) relative to the median plane (50) and/or an angle of inclination (β) of the support (22-1, 22-2) relative to the frontal plane (52) can be changed, in particular adjusted, in particular independently of one another.

3. Wearable aid (10) according to either of the preceding claims, wherein the first support (22-1) and the second support (22-2) are each connected to the lower body attachment (18) via a ball joint (56-1, 56-2).

4. Wearable aid (10) according to any of the preceding claims, wherein the lower body attachment (18) is designed such that a relative position of the first lower connecting point (30-1) and the second lower connecting point (30-2) can be changed, in particular a position of the first lower connecting point (30-1) and/or of the second lower connecting point (30-2) can be changed, more particularly adjusted, in particular independently of one another, when the aid (10) is worn laterally and medially relative to the median plane (50) and/or in the anterior direction and in the posterior direction relative to the frontal plane (52).

5. Wearable aid (10) according to any of the preceding claims, wherein the lower body attachment (18) comprises a lower force distribution device (58) which is connected to the supports (22-1, 22-2), in particular via the lower joint devices (48-1, 48-2), and wherein the lower body attachment (18) comprises a flexible lower body attachment device (80), which is connected to the lower force distribution device (58), for being attached to a body region of the operator (12), in particular wherein the lower body attachment device (80) comprises at least one textile part (82), in addition in particular in the form of a belt, belt system or a cuff.

6. Wearable aid (10) according to claim 5, wherein the lower force distribution means (58) comprises a lower main body (60) which extends between the first support (22-1) and the second support (22-2) and on which the lower joint devices (48-1, 48-2) are arranged, wherein the lower main body (60) comprises a first lower adjustment mechanism (64) which is designed to change, in particular to adjust, a distance between the lower connecting points (30-1, 30-2), in addition in particular to change the position between the lower connecting points (30-1, 30-2) laterally and medially relative to the median plane (50).

7. Wearable aid according to any of the preceding claims, wherein the lower joint devices (48-1, 48-2) are each held on the lower body attachment (18), in particular on the lower main body (60), via a pivoting device (62-1, 62-2), wherein the pivoting device (62-1, 62-2) is designed to change a position of the lower joint devices (48-1, 48-2) in the anterior direction or in the posterior direction relative to the frontal plane (52).

8. Wearable aid (10) according to claim 5, wherein the lower force distribution device (58) comprises a first hip cup (84-1) for abutting a right hip region of the operator (12) and a second hip cup (84-2) for abutting a left hip region of the operator (12), wherein the first support (22-1) is connected to the first hip cup (84-1) via the first lower joint device (48-1) and wherein the second support (22-2) is connected to the second hip cup (84-2) via the second lower joint device (48-2), in particular wherein the hip cups (84-1, 84-2) are designed such that, when the aid (10) is worn, the hip cups (84-1, 84-2) protrude ventrally into a groin region (92) of the operator (12) such that dorsally directed forces can be introduced into the body of the operator (12) via the hip cups (84-1, 84-2).

9. Wearable aid (10) according to claim 8, wherein the first and second hip cups (84-1, 84-2) are displaceably mounted on the lower body attachment device (18), in particular on the at least one textile part (82), in particular such that by displacing the first and/or the second hip cup (84-1, 84-2) relative to the lower body attachment device (18), a distance between the lower connecting points (30-1, 30-2) relative to one another, in particular a position of the lower connecting points (30-1, 30-2) laterally and medially relative to the median plane (50) and/or in the anterior direction and in the posterior direction relative to the frontal plane (52), can be changed, in particular adjusted.

10. Wearable aid (10) according to any of the preceding claims, wherein the first support (22-1) is connected to the upper body attachment (20) at a first upper connecting point (32-1), in particular in an articulated manner, in addition in particular via a first upper joint device (106-1), and wherein the second support (22-2) is connected to the upper body attachment (20) at a second upper connecting point (32-2), in particular in an articulated manner, in addition in particular via a second upper joint device (106-2).

11. Wearable aid (10) according to claim 10, wherein the first upper joint device (106-1) and the second upper joint device (106-2) each have at least three degrees of joint freedom.

12. Wearable aid (10) according to either of claims 10 or 11, wherein the first upper joint device (106-1) and the second upper joint device (106-2) each have:
a. a first degree of freedom of swivel about a first swivel axis (136) which is orthogonal to the median plane (50), in particular when the aid (10) is worn;
b. a second degree of freedom of swivel about a second swivel axis (140) orthogonal to the first swivel axis (136), in particular orthogonal to the frontal plane (52) when the aid (10) is worn;
c. a translational degree of freedom along a longitudinal axis (54) of the support (22-1 , 22-2), in particular along a longitudinal axis (54) of the back portion (24-1 , 24-2) of the support (22-1, 22-2).

13. Wearable aid (10) according to any of the preceding claims, wherein the upper body attachment (20) comprises an upper force distribution device (110) which is connected to the supports (22-1, 22-2), in particular via the upper joint device (106-1, 106-2), and wherein the upper body attachment (20) comprises a flexible upper body attachment device (120), which is connected to the upper force distribution device (110), for being attached to an upper body region of the operator (12), in particular wherein the upper body attachment device (120) comprises at least one textile part (122), in addition in particular in the form of a belt, belt system (118) or a cuff.

14. Wearable aid (10) according to any of claims 10 to 13, wherein the upper body attachment (20) is designed such that a relative position of the first upper connecting point (32-1) and the second upper connecting point (32-2) can be changed, in particular a position of the first upper connection point (32-1) and/or of the second upper connection point (32-2) can be changed, in particular adjusted, laterally and medially relative to the median plane (50) and/or in the anterior direction and in the posterior direction relative to the frontal plane (52), in particular independently of one another, when the auxiliary device (10) is worn.

15. Wearable aid according to any of claims 10 to 14, wherein the upper and the lower body attachment (18, 20) are designed in such a way that a relative position of the upper connecting points (32-1, 32-2) and a relative position of the lower connecting points (30-1, 30-2) can be changed independently of one another, in particular can be adjusted.

## Revendications

1. Dispositif auxiliaire (10) pouvant être enfilé pour aider un opérateur (12) à soulever et/ou à maintenir des charges (14), comprenant
- une structure de support (16) avec un premier support (22-1) et un deuxième support (22-2), dans lequel le premier support (22-1) et le deuxième support (22-2) présentent chacun une partie dorsale (24-1, 24-2) et une partie en porte-à-faux (26-1, 26-2) de telle sorte que, lorsque le dispositif auxiliaire (10) est enfilé par l'opérateur (12), la partie dorsale (24-1, 24-2) est disposée postérieurement et s'étend sensiblement le long de la partie dorsale de l'opérateur (12) et la partie en porte-à-faux (26-1, 26-2) s'étend de la partie postérieure vers la partie antérieure ;
- une attache corporelle inférieure (18) pour coupler la structure de support (16) à une zone de bassin, de hanche et/ou de lombaire de l'opérateur (12) ;
- une attache corporelle supérieure (20) pour coupler la structure de support (16) à un haut du corps de l'opérateur (12), en particulier à une zone de dos, d'épaule et/ou de la poitrine ;
- une première attache de main (40-1) destinée à être reliée à une zone de main ou d'avant-bras droit(e) de l'opérateur (12), dans lequel la première attache de main (40-1) est reliée au premier support (22-1) par l'intermédiaire d'un premier équipement de liaison (42-1) de longueur variable ;
- une deuxième attache de main (40-2) destinée à être attachée à une zone de main ou d'avant-bras gauche de l'opérateur (12), dans lequel la deuxième attache de main (40-2) est attachée au deuxième support (22-2) par l'intermédiaire d'un deuxième équipement de liaison (42-2) de longueur variable,
dans lequel le premier support (22-1) est relié à l'attache corporelle inférieure (18) au niveau d'un premier point de liaison inférieur (30-1) par l'intermédiaire d'un premier équipement d'articulation inférieur (48-1) et dans lequel le deuxième support (22-2) est relié à l'attache corporelle inférieure (18) au niveau d'un deuxième point de liaison inférieur (30-2) par l'intermédiaire d'un deuxième équipement d'articulation inférieur (48-2), dans lequel le premier équipement d'articulation inférieur (48-1) et le deuxième équipement d'articulation inférieur (48-2) présentent chacun au moins deux degrés de liberté d'articulation.

2. Dispositif auxiliaire (10) pouvant être enfilé selon la revendication 1, dans lequel le premier équipement d'articulation inférieur (48-1) et le deuxième équipement d'articulation inférieur (48-2) sont respectivement réalisés de telle sorte que, lorsque le dispositif auxiliaire (10) est enfilé, un angle d'inclinaison (α) du support (22-1, 22-2) par rapport au plan médian (50) et/ou un angle d'inclinaison (β) du support (22-1, 22-2) par rapport au plan frontal (52) peuvent être modifiés, en particulier réglés, en particulier indépendamment l'un de l'autre.

3. Dispositif auxiliaire (10) pouvant être enfilé selon l'une quelconque des revendications précédentes, dans lequel le premier support (22-1) et le deuxième support (22-2) sont chacun reliés à l'attache corporelle inférieure (18) par l'intermédiaire d'une rotule (56-1, 56-2).

4. Dispositif auxiliaire (10) pouvant être enfilé selon l'une quelconque des revendications précédentes, dans lequel l'attache corporelle inférieure (18) est réalisée de telle sorte qu'une position relative du premier point de liaison inférieur (30-1) et du deuxième point de liaison inférieur (30-2) peut être modifiée, en particulier une position du premier point de liaison inférieur (30-1) et/ou du deuxième point de liaison inférieur (30-2) peut être modifiée, plus particulièrement réglée, latéralement et médialement par rapport au plan médian (50) et/ou dans la direction antérieure et dans la direction postérieure par rapport au plan frontal (52), en particulier indépendamment l'une de l'autre, lorsque le dispositif auxiliaire (10) est enfilé.

5. Dispositif auxiliaire (10) pouvant être enfilé selon l'une quelconque des revendications précédentes, dans lequel l'attache corporelle inférieure (18) comprend un équipement de répartition de force inférieur (58), lequel est relié aux supports (22-1, 22-2), en particulier par le biais des équipements d'articulation inférieurs (48-1, 48-2), et dans lequel l'attache corporelle inférieure (18) comprend un équipement d'attache corporelle inférieure (80) flexible relié à l'équipement de répartition de force inférieur (58) pour l'attache à une zone corporelle de l'opérateur (12), en particulier dans lequel l'équipement d'attache corporelle inférieure (80) comprend au moins une pièce textile (82), plus particulièrement sous la forme d'une ceinture, d'un système de ceinture ou d'un manchon.

6. Dispositif auxiliaire (10) pouvant être enfilé selon la revendication 5, dans lequel l'équipement de répartition de force inférieur (58) présente un corps de base inférieur (60), lequel s'étend entre le premier support (22-1) et le deuxième support (22-2) et sur lequel les équipements d'articulation inférieurs (48-1, 48-2) sont disposés, dans lequel le corps de base inférieur (60) comprend un premier mécanisme de réglage inférieur (64), lequel est réalisé pour modifier, en particulier pour régler, une distance des points de liaison inférieurs (30-1, 30-2), et plus particulièrement pour modifier la position des points de liaison inférieurs (30-1, 30-2) latéralement et médialement par rapport au plan médian (50) .

7. Dispositif auxiliaire pouvant être enfilé selon l'une quelconque des revendications précédentes, dans lequel les équipements d'articulation inférieurs (48-1, 48-2) sont chacun maintenus par l'intermédiaire d'équipements de pivotement (62-1, 62-2) sur l'attache corporelle inférieure (18), en particulier sur le corps de base inférieur (60), dans lequel l'équipement de pivotement (62-1, 62-2) est réalisé pour modifier une position des équipements d'articulation inférieurs (48-1, 48-2) dans la direction antérieure ou dans la direction postérieure par rapport au plan frontal (52).

8. Dispositif auxiliaire (10) pouvant être enfilé selon la revendication 5, dans lequel l'équipement de répartition de force inférieur (58) comprend une première coque de hanche (84-1) destinée à venir en appui sur une zone de hanche droite de l'opérateur (12) et une deuxième coque de hanche (84-2) destinée à venir en appui sur une zone de hanche gauche de l'opérateur (12), dans lequel le premier support (22-1) est relié à la première coque de hanche (84-1) par l'intermédiaire du premier équipement d'articulation inférieur (48-1) et dans lequel le deuxième support (22-2) est relié à la deuxième coque de hanche (84-2) par l'intermédiaire du deuxième équipement d'articulation inférieur (48-2), en particulier dans lequel les coques de hanche (84-1, 84-2) sont réalisées de telle sorte que, lorsque le dispositif auxiliaire (10) est enfilé, les coques de hanche (84-1, 84-2) dépassent ventralement dans une zone d'aine (92) de l'opérateur (12), de telle sorte que des forces dirigées vers le dos peuvent être introduites dans le corps de l'opérateur (12) par l'intermédiaire des coques de hanche (84-1, 84-2).

9. Dispositif auxiliaire (10) pouvant être enfilé selon la revendication 8, dans lequel la première et la deuxième coque de hanche (84-1, 84-2) sont maintenues de manière coulissante sur l'équipement d'attache corporelle inférieure (18), en particulier sur l'au moins une pièce textile (82), en particulier de telle sorte que, par coulissement de la première et/ou de la deuxième coque de hanche (84-1, 84-2) par rapport à l'équipement d'attache corporelle inférieure (18), une distance des points de liaison inférieurs (30-1, 30-2) l'un par rapport à l'autre, en particulier une position des points de liaison inférieurs (30-1, 30-2) latéralement et médialement par rapport au plan médian (50) et/ou dans la direction antérieure et dans la direction postérieure par rapport au plan frontal (52) peut être modifiée, en particulier réglée.

10. Dispositif auxiliaire (10) pouvant être enfilé selon l'une quelconque des revendications précédentes, dans lequel le premier support (22-1) est relié à l'attache corporelle supérieure (20) au niveau d'un premier point de liaison supérieur (32-1), en particulier de manière articulée, plus particulièrement par l'intermédiaire d'un premier équipement d'articulation supérieur (106-1), et dans lequel le deuxième support (22-2) est relié à l'attache corporelle supérieure (20) au niveau d'un deuxième point de liaison supérieur (32-2), en particulier de manière articulée, plus particulièrement par l'intermédiaire d'un deuxième équipement d'articulation supérieur (106-2).

11. Dispositif auxiliaire (10) pouvant être enfilé selon la revendication 10, dans lequel le premier équipement d'articulation supérieur (106-1) et le deuxième équipement d'articulation supérieur (106-2) présentent chacun au moins trois degrés de liberté d'articulation.

12. Dispositif auxiliaire (10) pouvant être enfilé selon l'une quelconque des revendications 10 ou 11, dans lequel le premier équipement d'articulation supérieur (106-1) et le deuxième équipement d'articulation supérieur (106-2) présentent chacun :
a. un premier degré de liberté de pivotement autour d'un premier axe de pivotement (136), en particulier orthogonal au plan médian (50) lorsque le dispositif auxiliaire (10) est enfilé ;
b. un deuxième degré de liberté de pivotement autour d'un deuxième axe de pivotement (140) orthogonal au premier axe de pivotement (136), en particulier orthogonal au plan frontal (52) lorsque le dispositif auxiliaire (10) est enfilé ;
c. un degré de liberté de translation le long d'un axe longitudinal (54) du support (22-1, 22-2), en particulier le long d'un axe longitudinal (54) de la partie dorsale (24-1, 24-2) du support (22-1, 22-2).

13. Dispositif auxiliaire (10) pouvant être enfilé selon l'une quelconque des revendications précédentes, dans lequel l'attache corporelle supérieure (20) comprend un équipement de répartition de force supérieur (110), lequel est relié aux supports (22-1, 22-2), en particulier par l'intermédiaire des équipements d'articulation supérieurs (106-1, 106-2), et dans lequel l'attache corporelle supérieure (20) comprend un équipement d'attache corporelle supérieure (120) flexible relié à l'équipement de répartition de force supérieur (110) pour l'attache à une zone du haut du corps de l'opérateur (12), en particulier dans lequel l'équipement d'attache corporelle supérieure (120) comprend au moins une pièce textile (122), plus particulièrement sous la forme d'une ceinture, d'un système de ceinture (118) ou d'un manchon.

14. Dispositif auxiliaire (10) pouvant être enfilé selon l'une quelconque des revendications 10 à 13, dans lequel l'attache corporelle supérieure (20) est réalisée de telle sorte qu'une position relative du premier point de liaison supérieur (32-1) et du deuxième point de liaison supérieur (32-2) peut être modifiée, en particulier une position du premier point de liaison supérieur (32-1) et/ou du deuxième point de liaison supérieur (32-2), lorsque le dispositif auxiliaire (10) est enfilé, peut être modifiée, en particulier réglée, latéralement et médialement par rapport au plan médian (50) et/ou dans la direction antérieure et dans la direction postérieure par rapport au plan frontal (52), en particulier indépendamment l'une de l'autre.

15. Dispositif auxiliaire pouvant être enfilé selon l'une quelconque des revendications 10 à 14, dans lequel les attaches corporelles supérieure et inférieure (18, 20) sont réalisées de telle sorte qu'une position relative des points de liaison supérieurs (32-1, 32-2) et une position relative des points de liaison inférieurs (30-1, 30-2) peut être modifiée, notamment réglée, indépendamment l'une de l'autre.
